# EUROPEAN PATENT APPLICATION

(11) **EP 1 414 209 A1**
(43) Date of publication of application: **28.04.2004**
(21) Application number: 03024442.0
(22) Date of filing: 23.10.2003
(51) Int. Cl.: H04L 27/26, H04L 5/02

(54) **Apparatus and method for generating a preamble sequence in an OFDM communication system**

(30) Priority: 23.10.2002 KR 2002064951
(71) Applicant: SAMSUNG ELECTRONICS CO., LTD., Suwon-City, Kyungki-do (KR)
(72) Inventor: Jung, Dae-Kwon, Paldal-gu Suwon-city Kyungki-do (KR); Suh, Chang-Ho, Paldal-gu Suwon-city Kyungki-do (KR); Joo, Pan-Yuh, Paldal-gu Suwon-city Kyungki-do (KR); Park, Dong-Seek, Paldal-gu Suwon-city Kyungki-do (KR); Choi, Ho-Kyu, Paldal-gu Suwon-city Kyungki-do (KR)
(74) Representative: Grünecker, Kinkeldey, Stockmair & Schwanhäusser Anwaltssozietät

(57) **Abstract**

A method and apparatus for generating a preamble sequence in an orthogonal frequency division multiplexing (OFDM) communication system having m subcarriers in a frequency domain. The method comprises generating a preamble sequence of length n that is mapped to n subcarriers on a one-to-one basis, where n is less than m; and assigning components constituting the preamble sequence to the n subcarriers among the m subcarriers on a one-to-one mapping basis, assigning null data to the remaining subcarriers excluding the n subcarriers from the m subcarriers, and then IFFT (Inverse Fast Fourier Transform)-transforming the assigned result into time-domain data.

## Description

### BACKGROUND OF THE INVENTION

### 1. Field of the Invention

The present invention relates generally to an orthogonal frequency division multiplexing (OFDM) communication system, and in particular, to an apparatus and method for generating a preamble sequence having a minimum peak-to-average power ratio (PAPR).

### 2. Description of the Related Art

In general, a wireless communication system supporting a wireless communication service is comprised of Node Bs and user equipments (UEs). The Node B and the UE support a wireless communication service using transmission frames. Therefore, the Node B and the UE must mutually acquire synchronization for transmission and reception of transmission frames, and for the synchronization acquisition, the Node B transmits a synchronization signal, thereby enabling the UE to detect the start of a frame transmitted by the Node B. The UE then detects frame timing of the Node B by receiving the synchronization signal transmitted by the Node B, and demodulates received frames according to the detected frame timing. Generally, a particular preamble sequence previously appointed by the Node B and the UE is used for the synchronization signal.

In addition, a preamble sequence having a low peak-to-average power ratio (PAPR) is used for the preamble sequence used in an OFDM communication system, and a preamble created by concatenating a long preamble necessary for performing coarse synchronization to a short preamble necessary for performing fine frequency synchronization is used for the preamble transmitted from a Node B to a UE. Further, only the short preamble is used for the preamble transmitted from the UE to the Node B for acquiring fine frequency synchronization. The reason that the preamble sequence having a low PAPR must be used as a preamble sequence of the OFDM communication system will now be described below. First, because the OFDM communication system, which is a multicarrier communication system, uses a plurality of carriers, i.e., a plurality of subcarriers, orthogonality between the subcarriers is important. Therefore, phases of the subcarriers are appropriately set so that orthogonality therebetween should be secured, and if the phases are changed during signal transmission/reception through the subcarriers, signals on the subcarriers overlap each other. In this case, the amplitude of the signals that overlap due to the phase change deviates from a linear region of an amplifier included in the OFDM communication system, disabling normal signal transmission/reception. This is the reason why the OFDM communication system uses a preamble sequence having a minimal PAPR. Further, the OFDM communication system transmits data for several users, or UEs, by frequency-multiplexing one frame.

In the OFDM communication system, a frame preamble indicating start of a frame is transmitted for a predetermined period beginning at a start point of the frame. Because data may be irregularly transmitted to the respective UEs within one frame, a burst preamble indicting the start of data exists at a front part of each data block. Therefore, a UE must receive a data frame in order to identify a transmission start point of the data. The UE should be synchronized to a start point of data in order to receive the data, and to this end, the UE must acquire a preamble sequence used in common by all systems for synchronization before receiving signals.

The OFDM communication system is identical to a non-OFDM communication system in a source coding scheme, a channel coding scheme and a modulation scheme. While a code division multiple access (CDMA) communication system spreads data before transmission, the OFDM communication system performs inverse fast Fourier transform (IFFT) on data and inserts a guard interval in the IFFT-transformed data before transmission. Therefore, compared with the CDMA communication system, the OFDM communication system can transmit a wideband signal with relatively simple hardware. In the OFDM communication system, if a parallel bit/symbol stream generated by parallel converting a plurality of serial bit/symbol streams is applied as a frequency-domain IFFT input after modulation is performed on data, an IFFT-transformed time-domain signal is output. The time-domain output signal is obtained by multiplexing a wideband signal with several narrowband subcarrier signals, and a plurality of modulation symbols are transmitted for one-OFDM symbol period through the IFFT process.

However, in the OFDM communication system, if the intact IFFT-transformed OFDM symbol is transmitted, interference between a previous OFDM symbol and a current OFDM symbol is unavoidable. In order to remove the inter-symbol interference, the guard interval is inserted. The guard interval is proposed to insert null data for a predetermined period. However, in a method of transmitting null data for the guard interval, if a receiver incorrectly estimates a start point of an OFDM symbol, interference occurs between subcarriers, causing an increase in an error probability of a received OFDM symbol. Therefore, a "cyclic prefix" scheme or a "cyclic postfix" scheme has been proposed for the guard interval. In the former scheme, last 1/n bits in a time-domain OFDM symbol are copied and then inserted in an effective OFDM symbol, and in the latter scheme, first 1/n bits in a time-domain OFDM symbol are copied and then inserted in an effective OFDM symbol. A receiver may acquire time/frequency synchronization of a received OFDM symbol using a method of copying a part of one time-domain OFDM symbol, i.e., a first part or a last part of one OFDM symbol, and then repeatedly arranging the copied OFDM symbols.

In any radio frequency (RF) system, a transmission signal transmitted by a transmitter is distorted while it passes through a radio channel, and thus, a receiver receives a distorted transmission signal. The receiver acquires time/frequency synchronization of the received distorted transmission signal, using a preamble sequence previously set between the transmitter and the receiver, performs channel estimation, and then demodulates the channel-estimated signal into frequency-domain symbols through fast Fourier transform (FFT). After demodulating the channel-estimated signal into frequency-domain symbols, the receiver performs channel decoding and source decoding corresponding to the channel coding applied in the transmitter on the demodulated symbols, to thereby decode the demodulated symbols into information data.

The OFDM communication system uses a preamble sequence in performing frame timing synchronization, frequency synchronization, and channel estimation. The OFDM communication system may perform frame timing synchronization, frequency synchronization and channel estimation using a guard interval and a pilot subcarrier in addition to the preamble. The preamble sequence is used to transmit known symbols at a beginning part of every frame or data burst, and update estimated time/frequency/channel information at a data transmission part, using information on the guard interval and the pilot subcarrier.

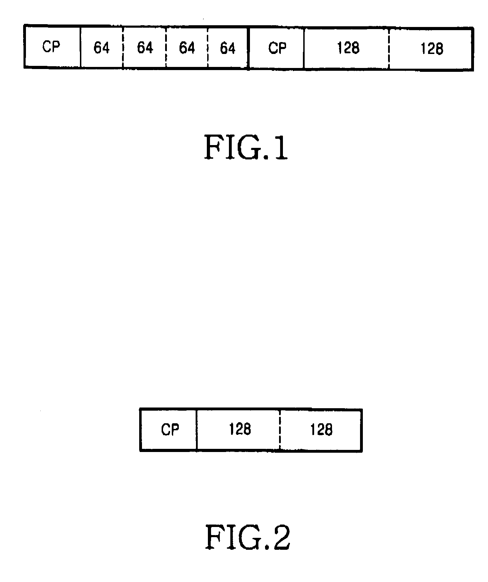

A structure of a preamble sequence used in a current OFDM communication system will now be described with reference to FIGs. 1 and 2.

FIG. 1 is a diagram illustrating a structure of a long preamble sequence for a common OFDM communication system. It should be noted that a current OFDM communication system uses the same preamble sequence in both a downlink (DL) and an uplink (UL). Referring to FIG. 1, in the long preamble sequence, a length-64 sequence is repeated 4 times and a length-128 sequence is repeated 2 times, and in the light of a characteristic of the OFDM communication system, the above-stated cyclic prefix (CP) is added to a front end of the 4 repeated length-64 sequences and to a front end of the 2 repeated length-128 sequences. In addition, as described above, signals obtained before performing IFFT are frequency-domain signals, while signals obtained after performing IFFT are time-domain signals. The long preamble sequence illustrated in FIG. 1 represents a time-domain long preamble sequence obtained after performing IFFT.

Frequency-domain long preamble sequences obtained before IFFT are illustrated below.

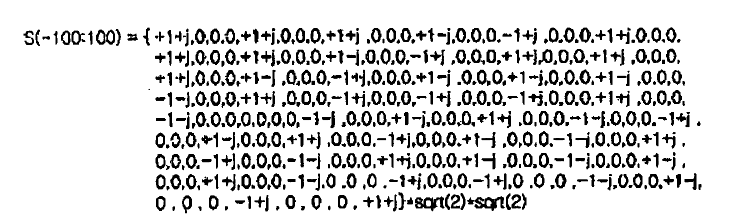

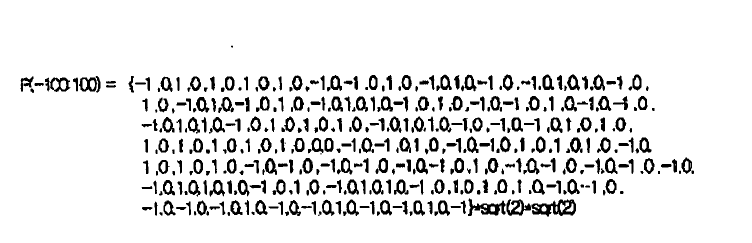

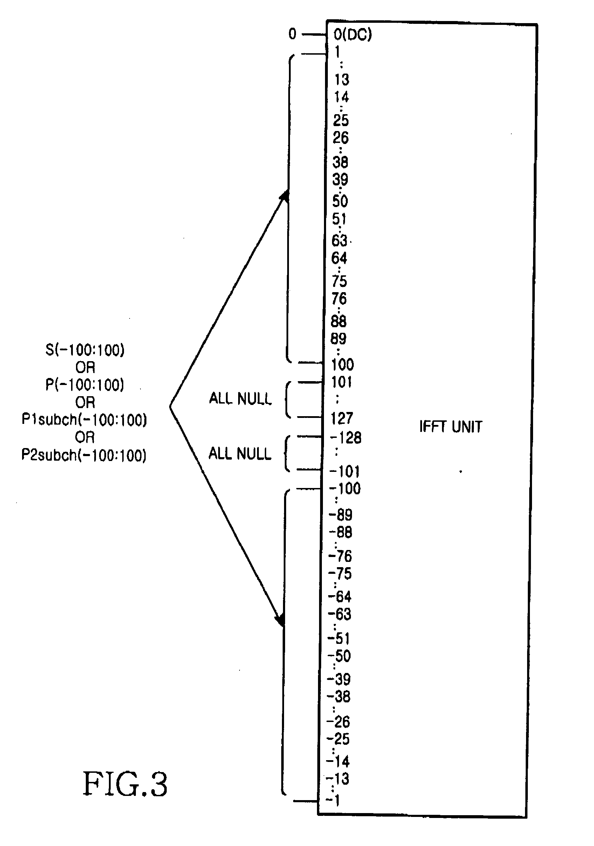

Numerals specified in the frequency-domain long frequency sequences S(-100:100) and P(-100:100) represent subcarriers' positions applied while IFFT is performed, and a detailed description thereof will be made with reference to FIG. 3. S(-100:100) represents a frequency-domain sequence obtained by repeating a 64-length sequence 4 times, and P(-100:100) represents a frequency-domain sequence obtained by repeating a length-128 sequence 2 times. In the expression of S(-100:100) and P(-100:100), 'sqrt(2)' means 'root 2', and 'sqrt(2)*sqrt(2)' means performing double amplification to increase transmission power of S(-100:100) and P(-100:100).

FIG. 2 is a diagram illustrating a structure of a short preamble sequence for an OFDM communication system. Referring to FIG. 2, in the short preamble sequence, a length-128 sequence is repeated 2 times, and in the light of a characteristic of the OFDM communication system, the above-stated cyclic prefix (CP) is added to a front end of the 2 repeated length-128 sequences. In addition, the short preamble sequence illustrated in FIG 2 represents a time-domain short preamble sequence obtained after performing IFFT, and a frequency-domain short preamble sequence equals the above-stated P(-100:100).

The long preamble sequence stated above must be generated taking the following conditions into consideration.
(1) The long preamble sequence should have a low PAPR.
   In order to maximize transmission efficiency of a power amplifier (PA) in a transmitter of an OFDM communication system, a PAPR of an OFDM symbol should be low. That is, because an IFFT-transformed signal is applied to a power amplifier as described above, a low PAPR is required due to a non-linear characteristic of the power amplifier. A PAPR of an OFDM symbol should be low in a ratio of maximum power to average power of a time-domain OFDM symbol corresponding to an IFFT output terminal of the transmitter, and for a low ratio of the maximum power to the average power, uniform distribution must be provided. In other words, a PAPR of an output becomes low if symbols having a low cross correlation are combined in an IFFT input terminal of the transmitter, i.e., in a frequency domain.
(2) The long preamble sequence should be suitable for parameter estimation needed for communication initialization.
   The parameter estimation includes channel estimation, frequency offset estimation, and time offset estimation.
(3) The long preamble sequence should have low complexity and low overhead.
(4) Coarse frequency offset estimation should be possible.

A function of the long preamble sequence generated considering the foregoing conditions will now be described herein below.
(1) A sequence obtained by repeating a length-64 sequence 4 times is used for time offset estimation and coarse frequency offset estimation.
(2) A sequence obtained by repeating a length-128 sequence 2 times is used for fine frequency offset estimation.

As a result, the long preamble sequence has the following uses in the OFDM communication system.
(1) The long preamble sequence is used as a first preamble sequence of a downlink protocol data unit (PDU).
(2) The long preamble sequence is used for initial ranging.
(3) The long preamble sequence is used for bandwidth request ranging.

Further, the short preamble sequence has the following uses in the OFDM communication system.
(1) The short preamble sequence is used as an uplink data preamble sequence.
(2) The short preamble sequence is used for periodic ranging.

In the OFDM communication system, because accurate synchronization can be acquired by performing initial ranging and periodic ranging, the uplink data preamble sequence is mainly used for channel estimation. For channel estimation, PAPR, performance and complexity should be taken into consideration. In the case of the existing short preamble sequence, a PAPR is 3.5805[dB], and various channel estimation algorithms such as a minimum mean square error (MMSE) algorithm and a least square (LS) algorithm are used.

In addition, the OFDM communication system uses a subchannelization method in order to increase frequency efficiency. The "subchannelization" scheme divides all of the subcarriers into several subchannels for efficient utilisation of a frequency, and each subchannel includes a specified number of subcarriers, the specified number being smaller than the number of all of the subcarriers. For example, if the number of all of the subcarriers for the OFDM communication system is 256 (-128,...,127), the number of subcarriers actually used is 200 (-100,...,100), and they are separated into 4 subchannels. In this case, the following subchannel assignment methods are possible.
1) all of the subcarriers in use (200 in number): -100,-99,...,-1,1,...,99, 100
2) guard interval: left (28 in number); -128,...,-101, right (27 in number); 101,...,127
3) subchannel assignment:
   (1) subchannel #1: : {-100,...,-89},{-50,...,-39},{1,...,13},{51,...,63}
   (2) subchannel #2 : {-88,...,-76},{-38,...,-26},{14,...,25},{64,...,75}
   (3) subchannel #3: {-75,...,-64},{-25,...,-14},{26,...,38},{76,...,88}
   (4) subchannel #4: {-63,...,-51},{-13,...,-1},{39,...,50},{89,...,100}

FIG. 3 is a diagram illustrating a mapping relation between subcarriers and a preamble sequence while IFFT is performed in an OFDM communication system. It is assumed in FIG. 3 that if the number of all of the subcarriers for an OFDM communication system is 256, the 256 sub carriers include -128^{th} to 127^{th} subcarriers, and if the number of subcarriers actually in use is 200, the 200 subcarriers include -100^{th},...,-1^{st},1^{st},...,100^{th} subcarriers. In FIG. 3, input numerals at an IFFT's front end represent frequency components, i.e., unique numbers of subcarriers. Here, of the 256 subcarriers, only 200 subcarriers are used. That is, only 200 subcarriers excluding a 0^{th} subcarrier, the -128^{th} to -101^{st} subcarriers, and the 101^{st} to 127^{th} subcarriers from the 256 subcarriers are used. Null data, or 0-data, is inserted in each of the 0^{th} subcarrier, -128^{th} to -101^{st} subcarriers and 101^{st} to 127^{th} subcarriers, before being transmitted, and the reasons are as follows.

First, the reason for inserting null data into the 0^{th} subcarrier is because the 0^{th} subcarrier, after performing IFFT, represents a reference point of a preamble sequence in a time domain, i.e., represents a DC (Direct Current) component in a time domain. In addition, the reason for inserting null data into 28 subcarriers of the -128^{th} to -101^{st} subcarriers and 27 subcarriers of the 101^{st} to 127^{th} subcarriers is to provide a guard interval in a frequency domain because the 28 subcarriers of the -128^{th} to -101^{st} subcarriers and the 27 subcarriers of the 101^{st} to 127^{th} subcarriers correspond to a high frequency band in the frequency domain.

As a result, if a frequency-domain preamble sequence of S(-100:100), P(-100:100), P1subch(-100:100), or P2subch(-100:100) is applied to an IFFT unit, the IFFT unit maps the frequency-domain preamble sequence of S(-100:100), P(-100:100), P1subch(-100:100), or P2subch(-100:100) to corresponding subcarriers, IFFT-transforms the mapped preamble sequence, and outputs a time-domain preamble sequence. Here, the P(-100:100) represents a frequency-domain preamble sequence when no subchannel is used, the P1subch(-100:100) represents a frequency-domain preamble sequence when one subchannel is used in the subchannelization process, and the P2subch(-100:100) represents a frequency-domain preamble sequence when two subchannels are used in the subchannelization process.

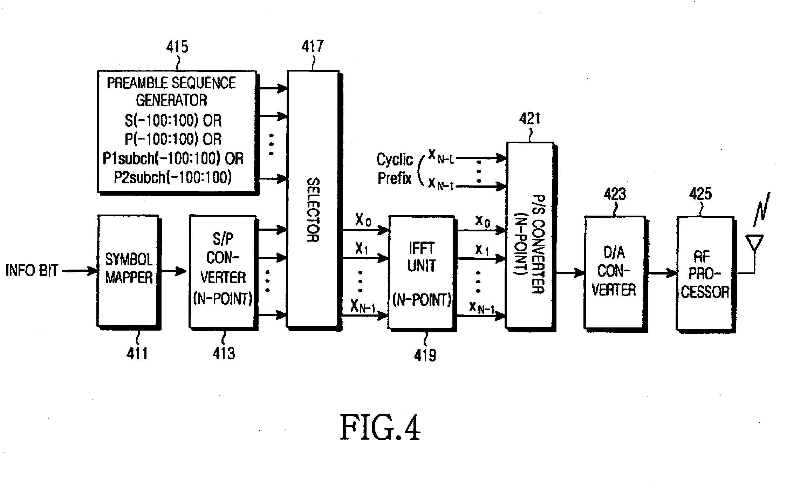

FIG. 4 is a block diagram illustrating a structure of a transmitter in an OFDM communication system. Referring to FIG 4, if information bits to be transmitted are generated, the information bits are applied to a symbol mapper 411. The symbol mapper 411 modulates the input information bits by a preset modulation scheme, symbol-maps the modulated bits, and then provides the symbol-mapped bits to a serial-to-parallel (S/P) converter 413. Here, quadrature phase shift keying (QPSK) or 16-ary quadrature amplitude modulation (16QAM) can be used as the modulation scheme. The serial-to-parallel converter 413 parallel-converts symbols received from the symbol mapper 411 so that the number of the received symbols is matched to an N-point which is the number of inputs of an inverse fast Fourier transformer (IFFT unit) 419, and then provides the parallel-converted symbols to a selector 417. A preamble sequence generator 415, under the control of a controller (not shown), generates a corresponding preamble sequence and provides the generated preamble sequence to the selector 417. The selector 417 selects a signal output from the serial-to-parallel converter 413 or a signal output from the preamble sequence generator 415 according to scheduling at a corresponding time, and provides the selected signal to the IFFT unit 419.

The IFFT unit 419 performs N-point IFFT on a signal output from the S/P converter 413 or the preamble sequence generator 415, and provides its output to a parallel-to-serial (P/S) converter 421. In addition to the signal output from the IFFT unit 419, a cyclic prefix is applied to the parallel-to-serial converter 421. The parallel-to-serial converter 421 serial-converts the signal output from the IFFT unit 419 and the cyclic prefix, and provides its output to a digital-to-analog (D/A) converter 423. The digital-to-analog converter 423 analog-converts a signal output from the parallel-to-serial converter 421, and provides the analog-converted signal to a radio frequency (RF) processor 425. The RF processor 425 includes a filter and a front-end unit, and RF-processes a signal output from the digital-to-analog converter 423 so that it can be transmitted over the air, and then transmits the RF signal via an antenna.

There are three cases where the subchannels are used.
(1) Case 1: only one of 4 subchannels is used. At this point, null data is transmitted over the remaining 3 subchannels except the above one subchannel.
(2) Case 2: only two of 4 subchannels are used (subchannel #1 + subchannel #3, or subchannel #2 + subchannel #4). At this point, null data is transmitted over the remaining subchannels except the above two subchannels.
(3) Case 3: all of the 4 subchannels are used (in a general OFDM communication system). That is, using all of the 4 subchannels is equivalent to the case where the subchannelization process is not substantially performed.

In the case of the existing short preamble sequences used in the subchannelization process, PAPRs of respective subchannels are shown in Table 1 below. Herein, in a process of calculating PAPRs of the subchannels, the cyclic prefix is not considered.

**Table 1**

| Subchannel | PAPR [dB] |
|---|---|
| 1 | 4.4092 |
| 2 | 5.8503 |
| 3 | 7.4339 |
| 4 | 6.9715 |
| 1+3 | 5.4292 |
| 2+4 | 5.9841 |
| 1+2+3+4 | 3.5805 |

As shown in Table 1, because PAPRs of the subchannels is 7.4339[dB] for the worst case, using the intact existing short preamble sequence in the subchannelization process deteriorates PAPR characteristics, thus failing to satisfy the low PAPR condition which must be considered first of all for the preamble sequence. Therefore, there is a demand for a new short preamble sequence.

### SUMMARY OF THE INVENTION

It is, therefore, an object of the present invention to provide an apparatus and method for generating a preamble sequence in an OFDM communication system.

It is another object of the present invention to provide an apparatus and method for generating a short preamble sequence having a minimum PAPR in an OFDM communication system.

According to one aspect of the present invention, there is provided an apparatus for generating a preamble sequence in an orthogonal frequency division multiplexing (OFDM) communication system having m subcarriers in a frequency domain. The apparatus comprises a preamble sequence generator for generating a preamble sequence of length n that is mapped to n subcarriers on a one-to-one basis, where n is less than m; and an inverse fast Fourier transformer (IFFT) for assi gning components constituting the preamble sequence to the n subcarriers among the m subcarriers on a one-to-one mapping basis, assigning null data to the remaining subcarriers excluding the n subcarriers from the m suhcarriers, and then IFFT-transforming the assigned result into time-domain data.

According to another aspect of the present invention, there is provided a method for generating a preamble sequence in an orthogonal frequency division multiplexing (OFDM) communication system having m subcarriers in a frequency domain. The method comprises the steps of: generating a preamble sequence of length n that is mapped to n subcarriers on a one-to-one basis, where n is less than m; and assigning components constituting the preamble sequence to the n subcarriers among the m subcarriers on a one-to-one mapping basis, assigning null data to the remaining subcarriers excluding the n subcarriers from the m subcarriers, and then IFFT (Inverse Fast Fourier Transform)-transforming the assigned result into time-domain data.

### BRIEF DESCRIPTION OF THE DRAWINGS

The above and other objects, features, and advantages of the present invention will become more apparent from the following detailed description when taken in conjunction with the accompanying drawings in which:
FIG. 1 is a diagram illustrating a structure of a long preamble sequence for a common OFDM communication system;
FIG. 2 is a diagram illustrating a structure of a short preamble sequence for a common OFDM communication system;
FIG. 3 is a diagram illustrating a mapping relation between subcarriers and a preamble sequence while IFFT is performed in an OFDM communication system;
FIG. 4 is a block diagram illustrating a structure of a transmitter in an OFDM communication system according to an embodiment of the present i nvention;
FIG. 5 is a diagram illustrating a mapping relation between subcarriers and a preamble sequence when IFFT is performed in an OFDM communication system according to an embodiment of the present invention; and
FIG. 6 is a flowchart illustrating a procedure for mapping a preamble sequence according to an embodiment of the present invention.

### DETAILED DESCRIPTION OF THE PREFERRED EMBODIMENT

Preferred embodiments of the present invention will now be described in detail herein below with reference to the annexed drawings. In the following description, a detailed description of known functions and configurations incorporated herein has been omitted for conciseness.

The invention proposes an apparatus and method for generating a preamble sequence having a minimum peak-to-average power ratio (PAPR) in an orthogonal frequency division multiplexing (OFDM) communication system in which the total number of subcarriers is N and unique numbers of subcarriers actually in use are -B, -B+1,...,-1, 1,...,B-1, B. Although the number of actual subcarriers is N in the OFDM communication system, because null data, or 0-data, is inserted into a 0^{th} subcarrier representing a DC component in a time domain and subcarriers (-N^{th} to (-B-1)^{th} subcarriers and (B+1)^{th} to (N-1)^{th} subcarriers) representing a high frequency band in a frequency domain, i.e., a guard interval in a time domain, as described in the prior art section, the number of subcarriers into which a preamble sequence is actually inserted becomes 2B.

As described in the prior art section, there are two kinds of preamble sequences: a long preamble sequence and a short preamble sequence. In the long preamble sequence, a length-N/4 sequence is repeated 4 times and a length-N/2 sequence is repeated 2 times, and in the light of a characteristic of the OFDM communication system, a cyclic prefix (CP) is added to a front end of the 4 repeated length-N/4 sequences and a front end of the 2 repeated length-N/2 sequences. Here, N represents the number of points, or inputs, of inverse fast Fourier transform (IFFT), which will be described below. For example, if it is assumed that the IFFT has 256 points, in the long preamble sequence, a length-256/4=64 sequence is repeated 4 times and a length-256/2=128 sequence is repeated 2 times. Further, in the short preamble sequence, a length-256/2=128 sequence is repeated 2 times, and in the light of a characteristic of the OFDM communication system, the cyclic prefix (CP) is added to a front end of the 2 repeated length-128 sequences.

In addition, the OFDM communication system uses a subchannelization method in order to increase frequency efficiency. For example, if the number of all of the subcarriers for the OFDM communication system is 256 (-128,...,127), the number of subcarriers actually used is 200 (-100,...,100), and they are separated into 4 subchannels. In this case, the following subchannel assignment method is possible.
1) all of the subcarriers in use (200 in number): -100,-99,...,-1,1,...,99, 100
2) guard interval: left (28 in number); -128,...,-101, right (27 in number); 101,...,127
3) subchannel assignment:
   (1) subchannel #1: : {-100,...,-89),{-50,....-39},{1,...,13},{51,...,63}
   (2) subchannel #2 : {-88,...,-76},{-38,...,-26},{14,...,25},{64,...,75}
   (3) subchannel #3: {-75,...,-64},{-25,...,-14},{26,...,38},{76,...,88}
   (4) subchannel #4: {-63,...,-51},{-13,...; 1},{39,...,50},{89,...,100}

Now, a description will be made of a preamble sequence mapping rule based on the subchannel assignment method in an OFDM communication system according to the present invention.

First, when all of the 4 subchannels are used in the subchannelization process of the OFDM communication system is used, the invention proposes the following preamble sequence mapping rule. It should be noted herein that the case where all of the 4 subchannels are used is equivalent to the case where no subchannel is used, i.e., the subchannelization process is not considered. Further, in the following description, the present invention proposes a preamble sequence in consideration of only the subcarriers actually used in the OFDM communication system. That is, in the OFDM communication system, if the total number of subcarriers is 256 and the number of subcarriers actually used is 200, the present invention generates a preamble sequence in consideration of the 200 subcarriers. Null data is inserted into 28 subcarriers of -128^{th} to -101^{st} subcarriers and 27 subcarriers of 101^{st} to 127^{th} subcarriers excluding the subearriers where the preamble sequence is inserted. The reason for inserting null data into the 28 subcarriers of -128^{th} to -101^{st} subcarriers and the 27 subcarriers of 101^{st} to 127^{th} subcarriers is to provide a guard interval in a frequency domain because the 28 subcarriers of the -128^{th} to -101^{st} subcarriers and the 27 subcarriers of the 101^{st} to 127^{th} subcarriers correspond to a high frequency band in the frequency domain.

### First Preamble Sequence Mapping Rule

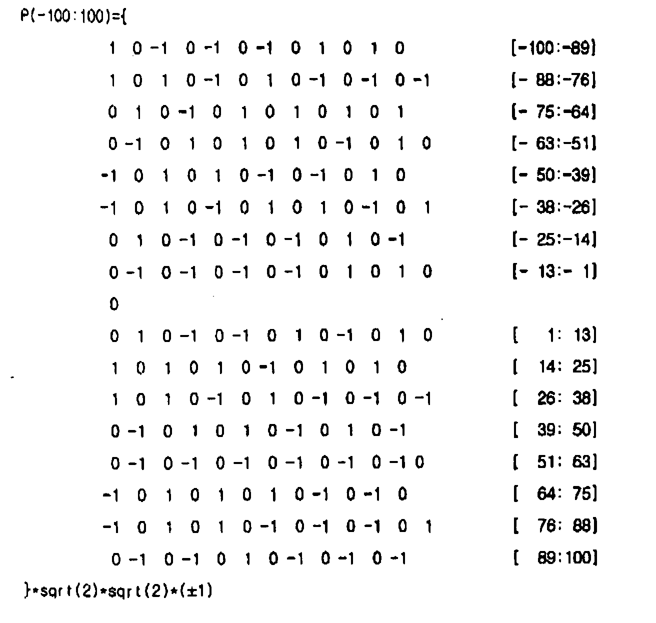

The first preamble sequence mapping rule shows short preamble sequences P(-100:100) applied when the subchannelization method is not actually applied, in the case where all of the 4 subchannels are used in the subchannelization process. In the P(-100:100), 'sqrt(2)' means 'root 2', and 'sqrt(2)*sqrt(2)' means performing double amplification to increase transmission power. Also, null data is inserted into a 0^{th} subcarrier corresponding to the preamble sequence P(-100:100), and the reason is because the 0^{th} subcarrier, after performing IFFT, represents a reference point of a preamble sequence in a time domain, i.e., represents a DC (Direct Current) component in a time domain. Here, a total of two sequences P(-100:100) shown in the first preamble sequence mapping rule have a PAPR of 2.671489[dB].

Second, when one subchannel, particularly a subchannel #1 is used in the subchannelization process of the OFDM communication system, the present invention proposes the following preamble sequence mapping rule.

### Second Preamble Sequence Mapping Rule

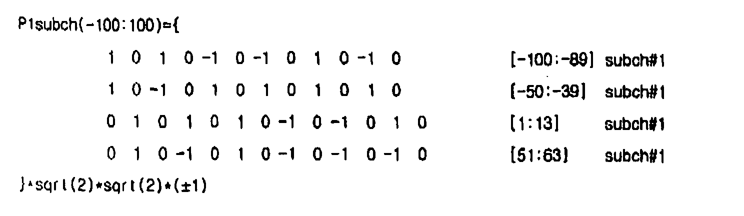

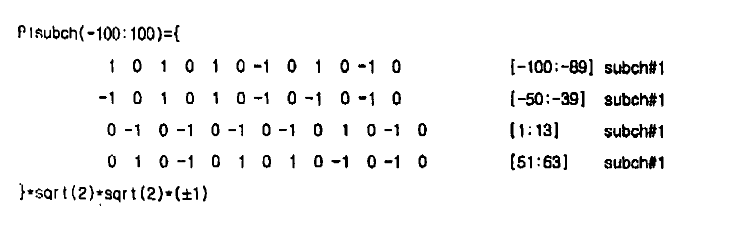

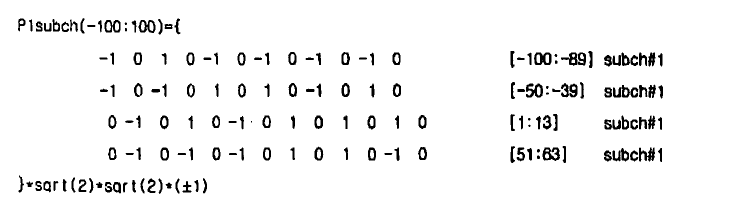

The second preamble sequence mapping rule shows short preamble sequences for the case where the subchannel #1 is used in the subchannelization process. That is, the second preamble sequence mapping rule shows only the data actually mapped to a subchannel #1 on the short preamble sequence in the case where the subchannel #1 is used. Herein, the short preamble sequences illustrated in the second preamble sequence mapping rule for the case where the subchannel #1 is used will be referred to as P11subch(-100:100), and the short preamble sequences P11subch(-100:100) are 6 in total, as follows.

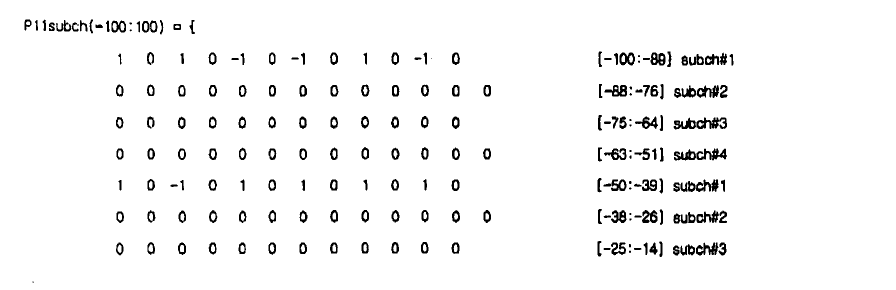

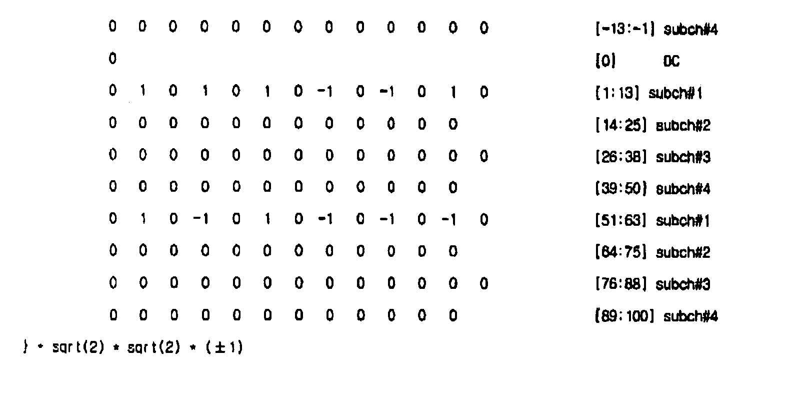

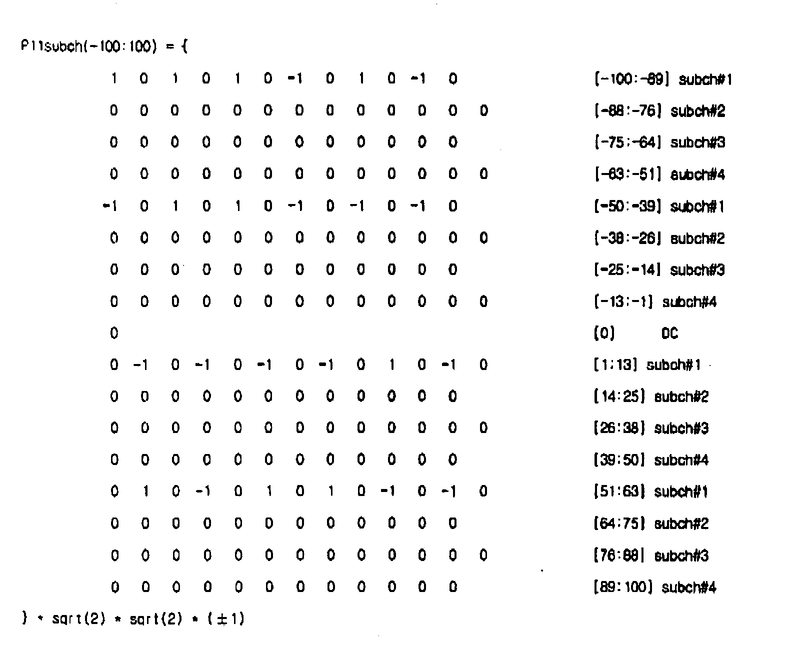

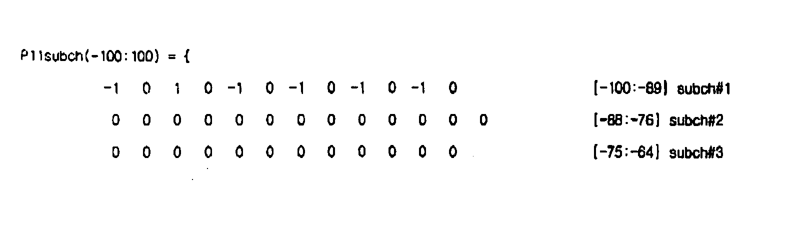

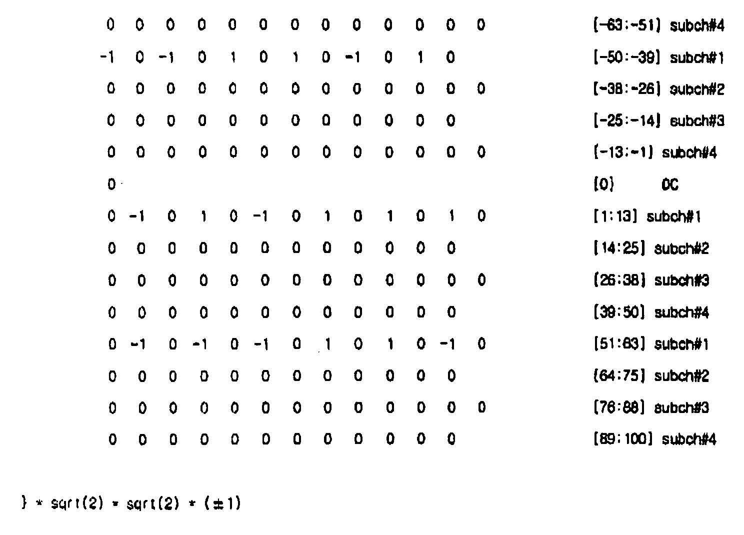

PAPRs of the 6 short preamble sequences P 11subch(-100:100) illustrated in the second preamble mapping rule are all 2.388903[dB], and a particular short preamble sequence P11subch(-100:100) can be selected from the 6 short preamble sequences P11subch(-100:100) and then assigned to the subchannel #1.

Third, when one subchannel, particularly a subchannel #2 is used in the subchannelization process of the OFDM communication system, the present invention proposes the following preamble sequence mapping rule.

### Third Preamble Sequence Mapping Rule

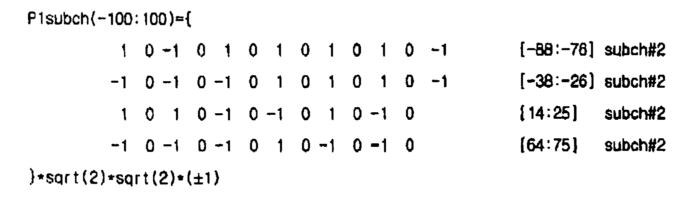

The third preamble sequence mapping rule shows short preamble sequences for the case where the subchannel #2 is used in the subchannelization process. That is, the third preamble sequence mapping rule shows only the data actually mapped to a subchannel #2 on the short preamble sequence in the case where the subchannel #2 is used. Herein, the short preamble sequences illustrated in the third preamble sequence mapping rule for the case where the subchannel #2 is used will be referred to as P12subch(-100:100), and the short preamble sequences P12subch(-100:100) are as follows.

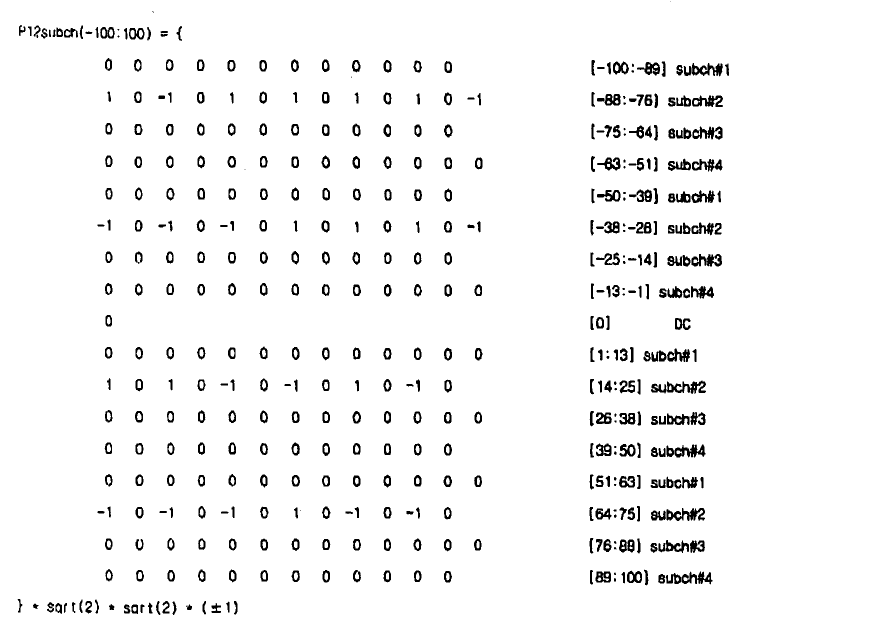

PAPRs of the 2 short preamble sequences P12subch(-100:100) illustrated in the third preamble mapping rule are all 2.322998[dB], and a particular short preamble sequence P12subch(-100:100) can be selected from the 2 short preamble sequences P12subch(-100:100) and then assigned to the subchannel #2.

Fourth, when one subchannel, particularly a subchannel #3 is used in the subchannelization process of the OFDM communication system, the present invention proposes the following preamble sequence mapping rule.

### Fourth Preamble Sequence Mapping Rule

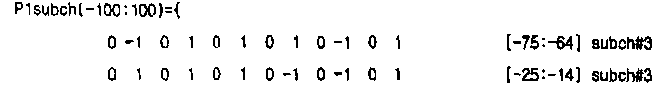

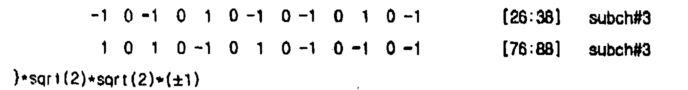

The fourth preamble sequence mapping rule shows short preamble sequences for the case where the subchannel #3 is used in the subchannelization process. That is, the fourth preamble sequence mapping rule shows only the data actually mapped to a subchannel #3 on the short preamble sequence in the case where the subchannel #3 is used. Herein, the short preamble sequences illustrated in the fourth preamble sequence mapping rule for the case where the subchannel #3 is used will be referred to as P13subch(-100:100), and the short preamble sequences P13subch(-100:100) are as follows.

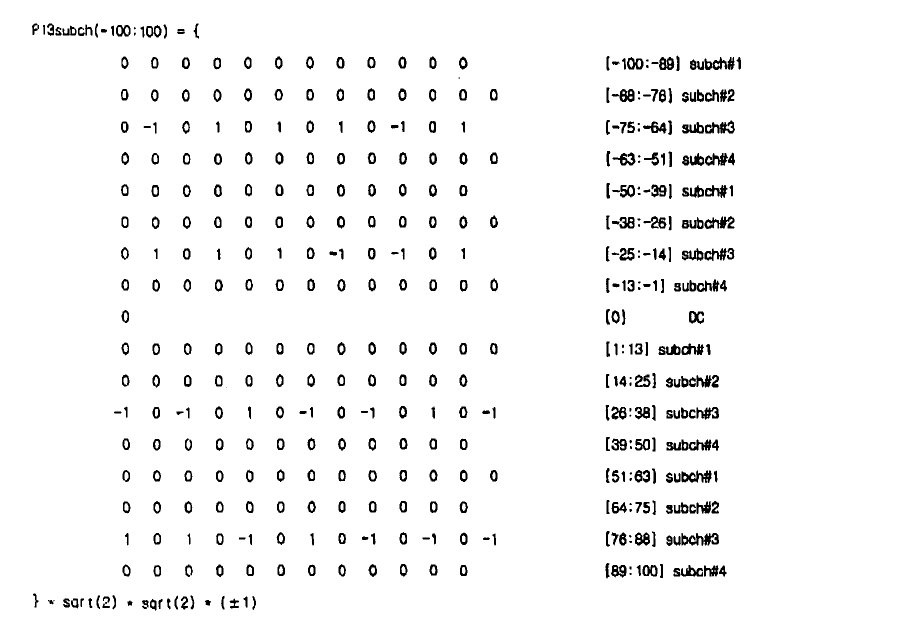

PAPRs of the 2 short preamble sequences P13subch(-100:100) illustrated in the fourth preamble mapping rule are all 2.322998[dB], and a particular short preamble sequence P13subch(-100:100) can be selected from the 2 short preamble sequences P13subch(-100:100) and then assigned to the subchannel #3.

Fifth, when one subchannel, particularly a subchannel #4 is used in the subchannelization process of the OFDM communication system, the present invention proposes the following preamble sequence mapping rule.

### Fifth Preamble Sequence Mapping Rule

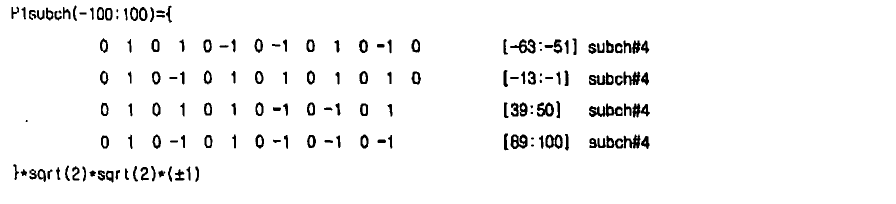

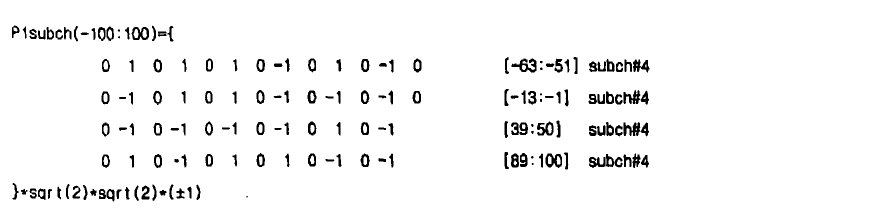

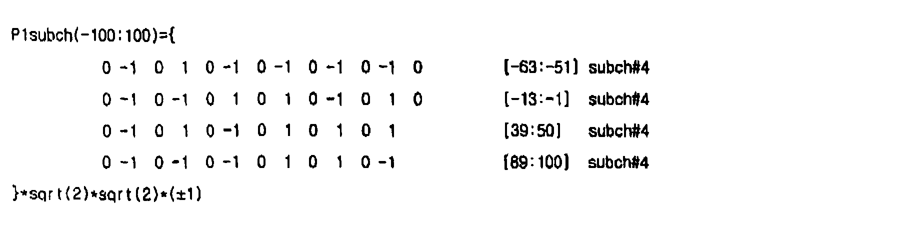

The fifth preamble sequence mapping rule shows short preamble sequences for the case where the subchannel #4 is used in the subchannelization process. That is, the fifth preamble sequence mapping rule shows only the data actually mapped to a subchannel #4 on the short preamble sequence in the case where the subchannel #4 is used. Herein, the short preamble sequences illustrated in the fifth preamble sequence mapping rule for the case where the subchannel #4 is used will be referred to as P14subch(-100:100), and the short preamble sequences P14subch(-100:100) are 6 in total, as follows.

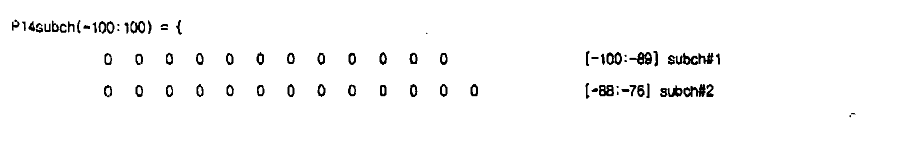

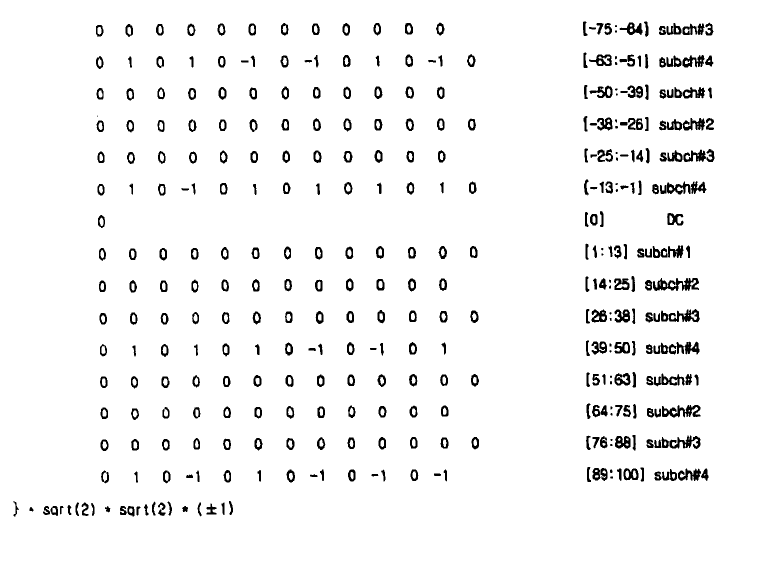

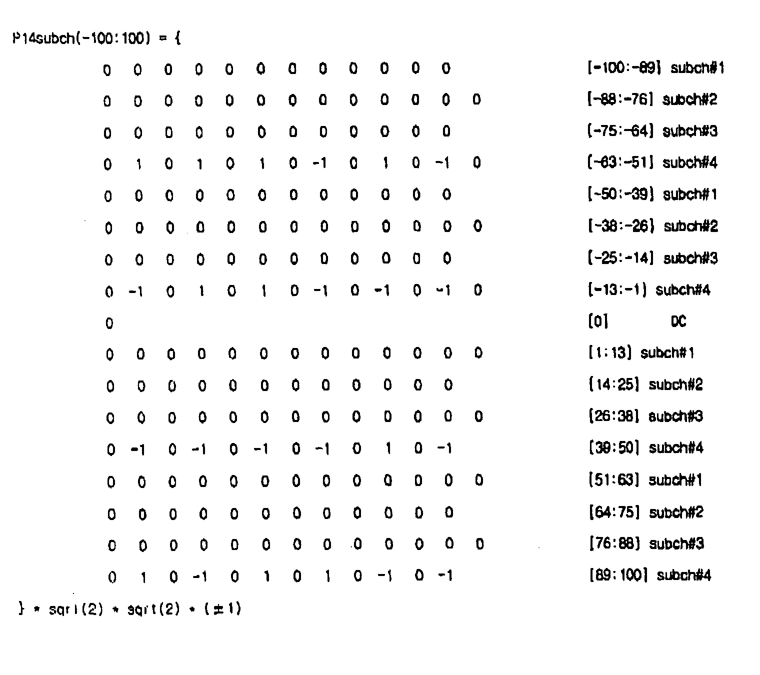

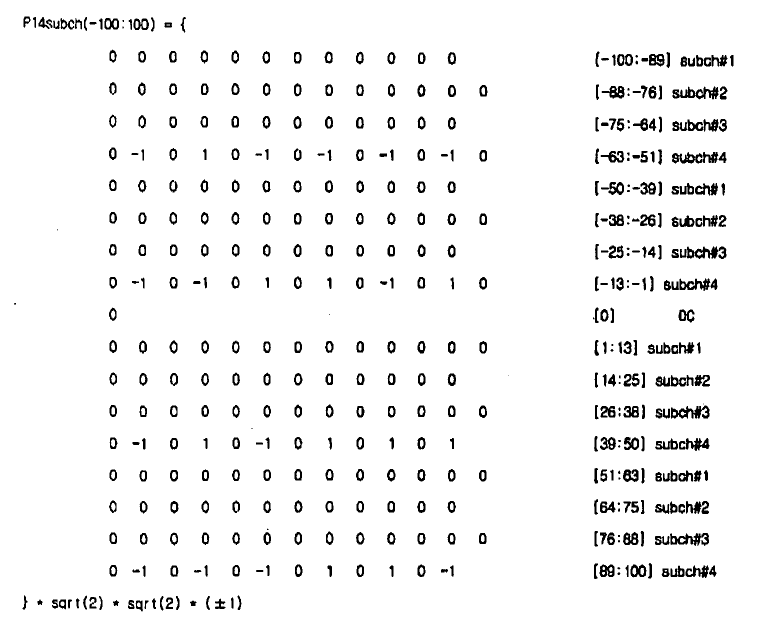

PAPRs of the 6 short preamble sequences P14subch(-100:100) illustrated in the fifth preamble mapping rule are all 2.388903[dB], and a particular short preamble sequence P14subch(-100:100) can be selected from the 6 short preamble sequences P14subch(-100:100) and then assigned to the subchannel #4.

Sixth, when two subchannels, particularly a subchannel #1 and a subchannel #3 are used in the subchannelization process of the OFDM communication system, the present invention proposes the following preamble sequence mapping rule.

### Sixth Preamble Sequence Mapping Rule

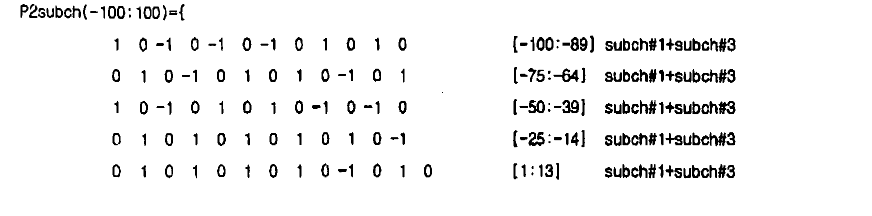

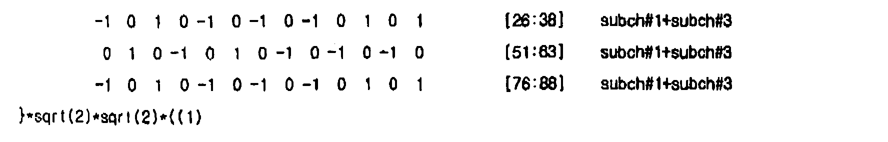

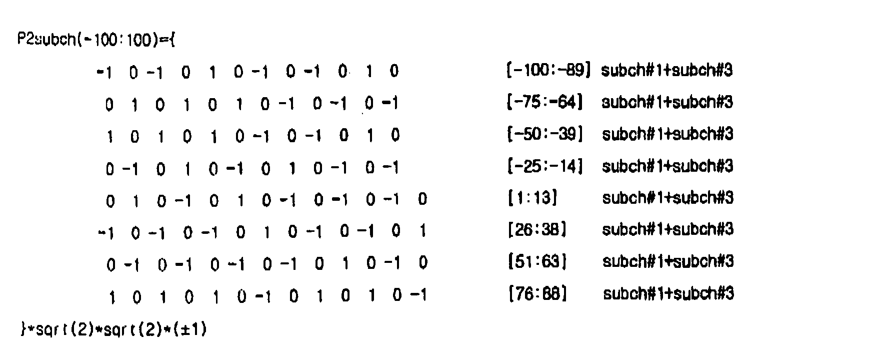

The sixth preamble sequence mapping rule shows short preamble sequences for the case where the subchannel #1 and the subchannel #3 are used in the subchannelization process. Herein, the short preamble sequences illustrated in the sixth preamble sequence mapping rule for the case where the subchannel #1 and the subchannel #3 are used will be referred to as P2(1+3)subch(-100:100), and the short preamble sequences P2(1+3)subch(-100:100) are 4 in total, as follows.

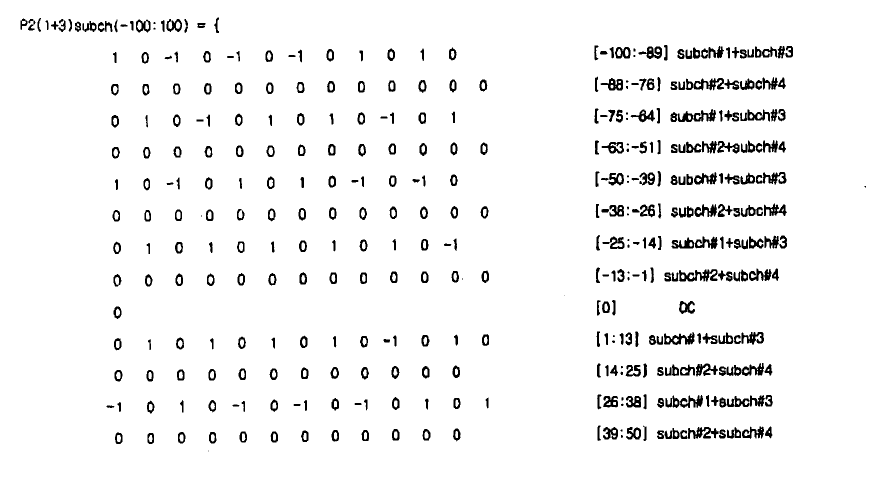

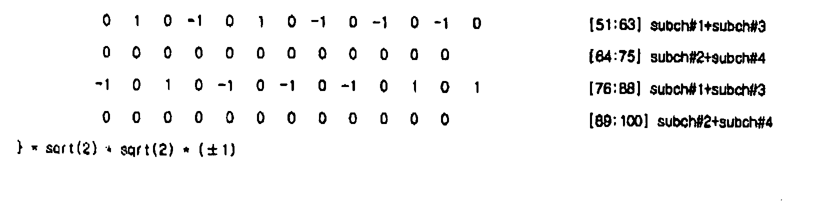

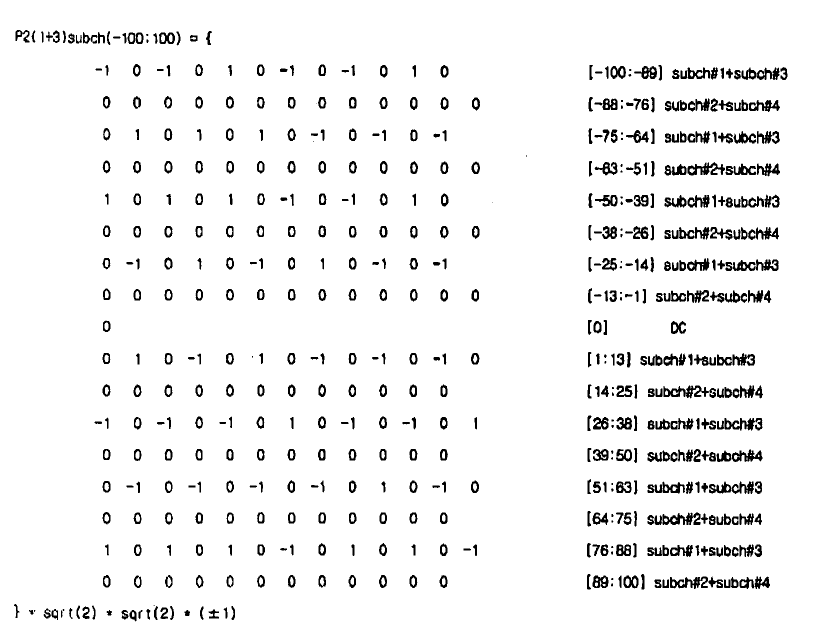

PAPRs of the 4 short preamble sequences P2(1+3)subch(-100:100) illustrated in the sixth preamble mapping rule are all 2.992562[dB], and a particular short preamble sequence P2(1+3)subch(-100:100) can be selected from the 4 short preamble sequences P2(1+3)subch(-100:100) and then assigned to the subchannel #1 and the subchannel #3.

Seventh, when two subchannels, particularly a subchannel #2 and a subchannel #4 are used in the subchannelization process of the OFDM communication system, the present invention proposes the following preamble sequence mapping rule.

### Seventh Preamble Sequence Mapping Rule

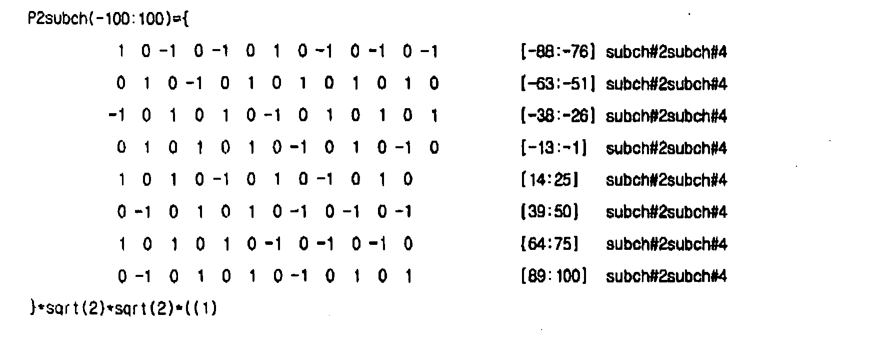

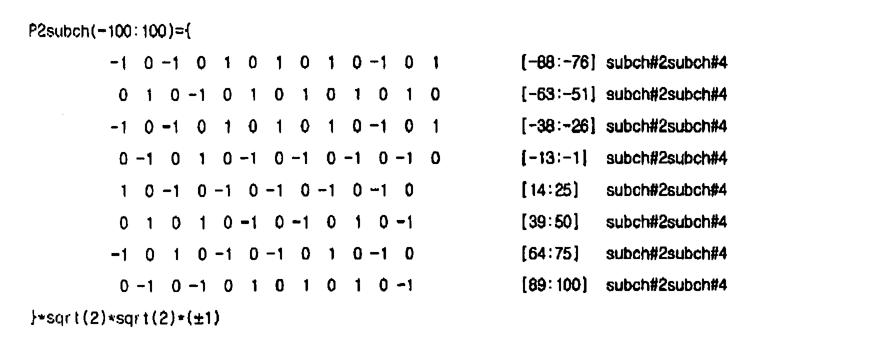

The seventh preamble sequence mapping rule shows short preamble sequences for the case where the subchannel #2 and the subchannel #4 are used in the subchannelization process. Herein, the short preamble sequences illustrated in the seventh preamble sequence mapping rule for the case where the subchannel #2 and the subchannel #4 are used will be referred to as P2(2+4)subch(-100:100), and the short preamble sequences P2(2+4)subch(-100:100) are 4 in total, as follows.

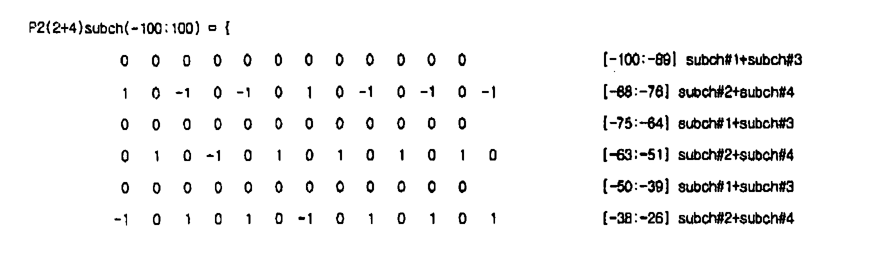

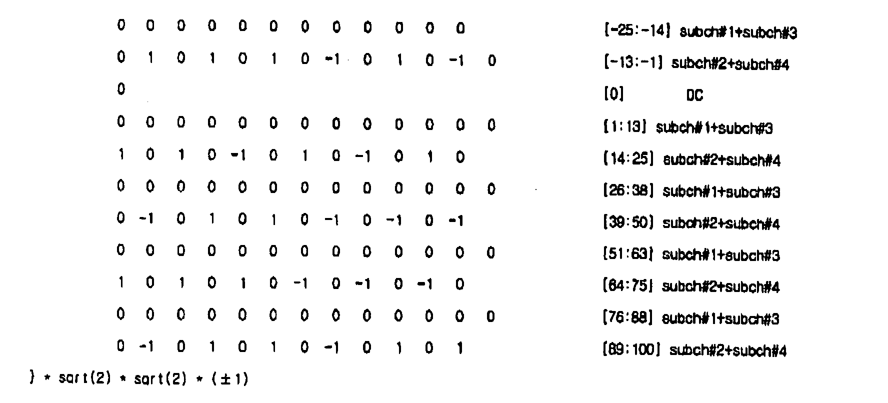

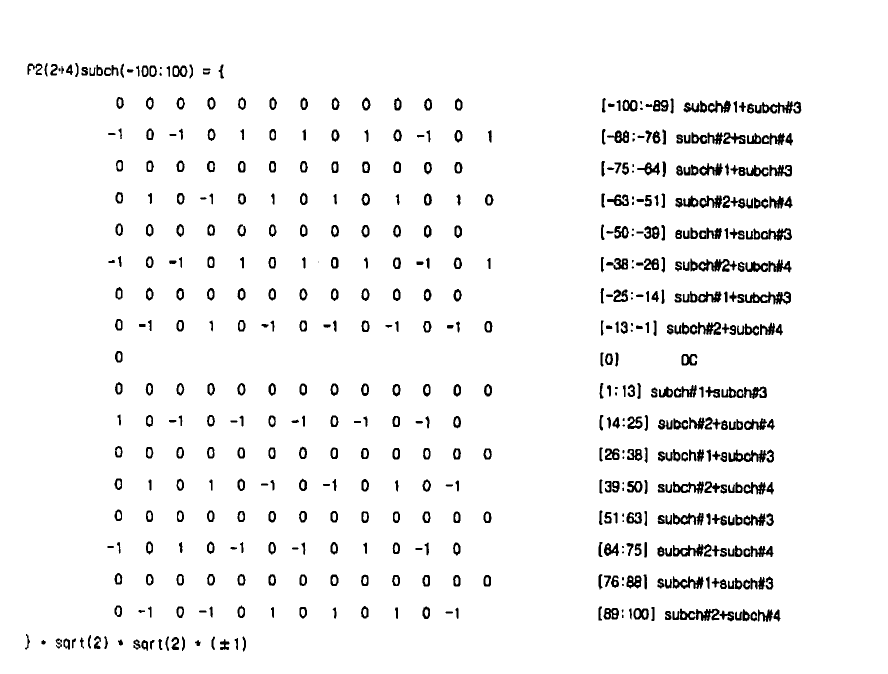

PAPRs of the 4 short preamble sequences P2(2+4)subch(-100:100) illustrated in the seventh preamble mapping rule are all 2.992562[dB], and a particular short preamble sequence P2(2+4)subch(-100:100) can be selected from the 4 short preamble sequences P2(2+4)subch(-100:100) and then assigned to the subchannel #2 and the subchannel #4.

The P11subch(-100:100), P12subch(-100:100), P13subch(-100:100), P2(1+3)subch(-100:100), and P2(2+4)subch(-100:100) are short preamble sequences in a frequency domain. In the OFDM communication system, signals before IFFT are frequency-domain signals, while signals after IFFT are time-domain signals. When one subchannel is used in the subchannelization process, a preamble sequence for the case where the corresponding subchannel is used is mapped to each of the subcarriers actually in use, i.e., -100^{th},...,-1^{st},1^{st},...,100^{th} subcarriers, and as a result, the short preamble sequence P1subch(-100:100) is mapped to all of the subcarriers. Here, the short preamble sequence P1subch(-100:100) represent short preamble sequences for the case where the respective subchannels are used, i.e., sequences for the case where P11subch(-100:100), P12subch(-100:100), P13subch(-100:100), and P14subch(-100:100) are all applied. The short preamble sequences P1subch(-100:100) are 18 in total, as follows.

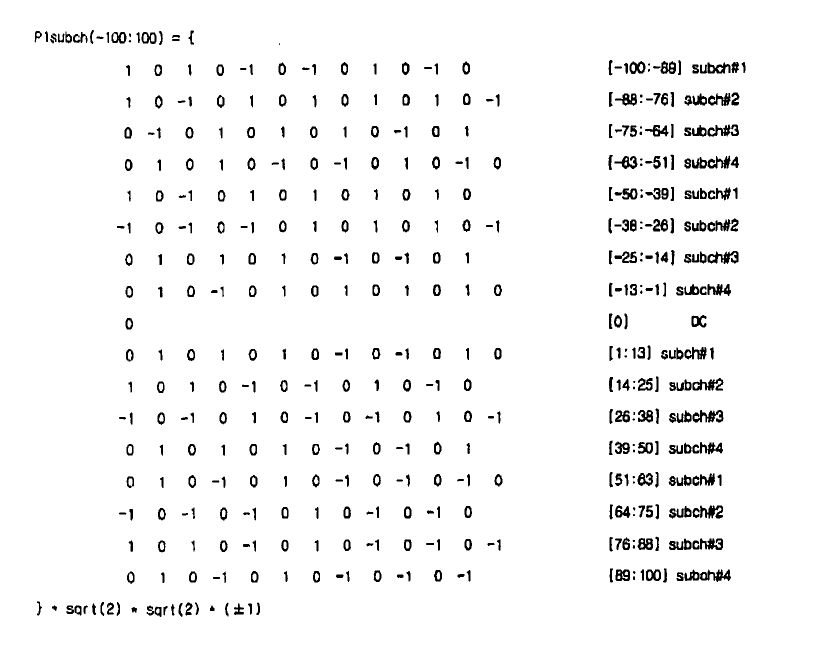

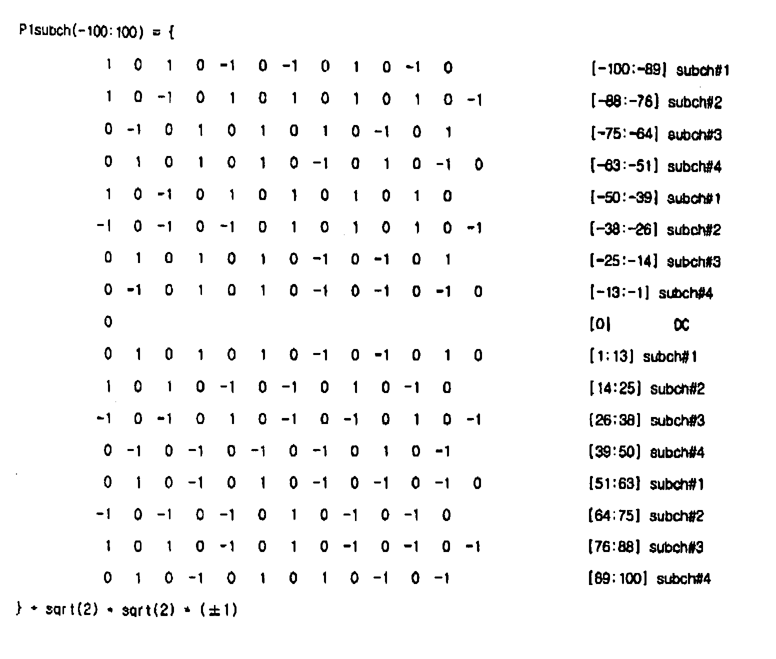

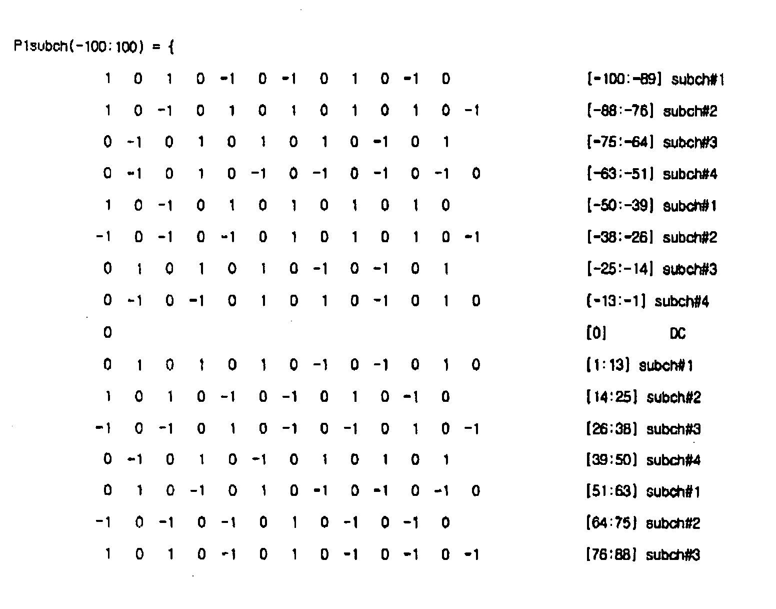

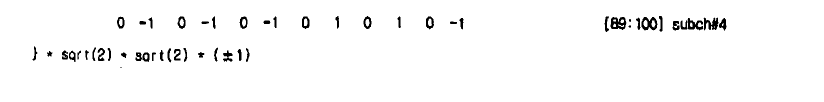

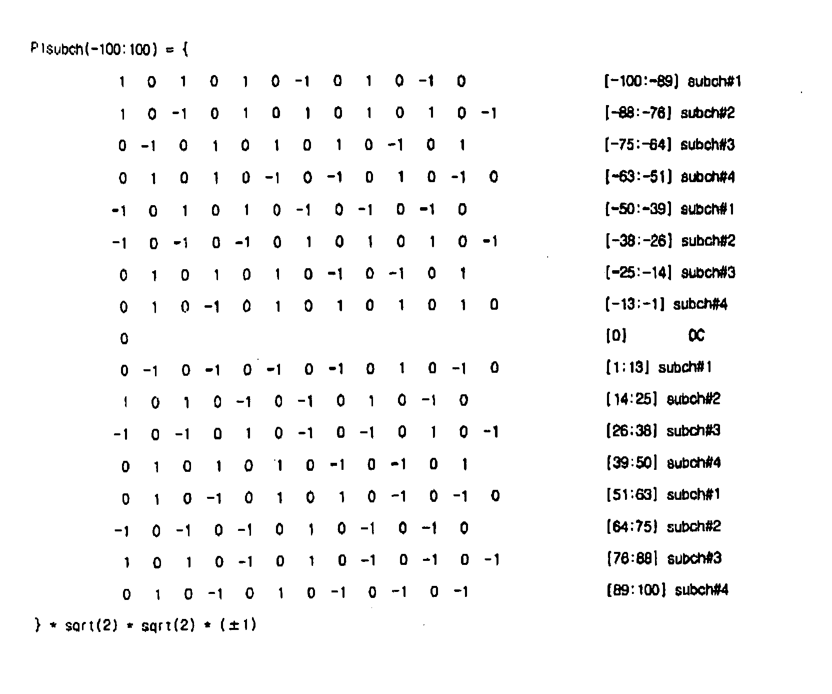

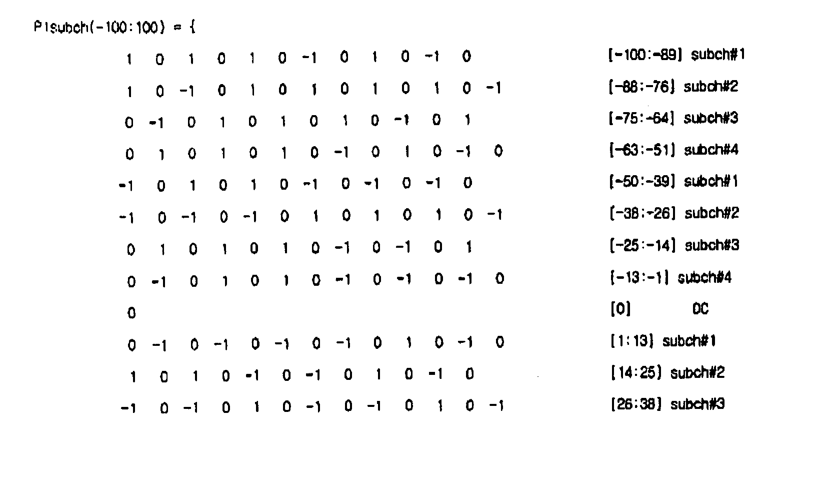

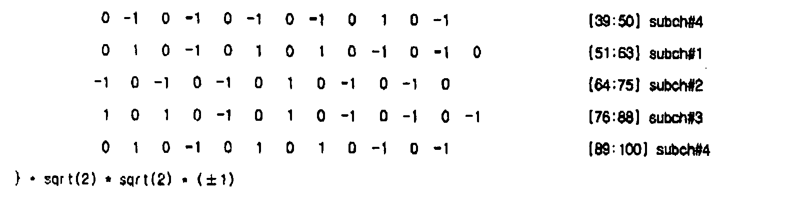

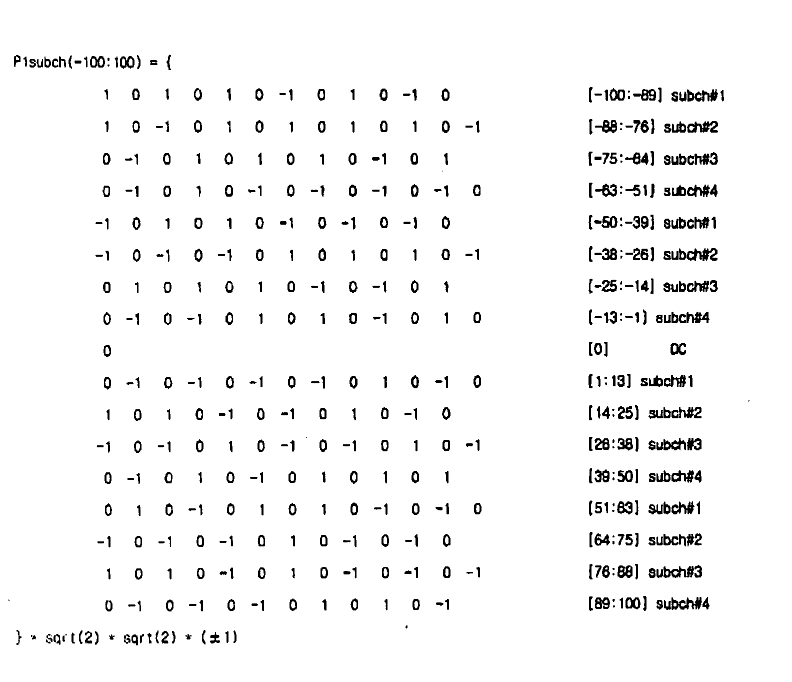

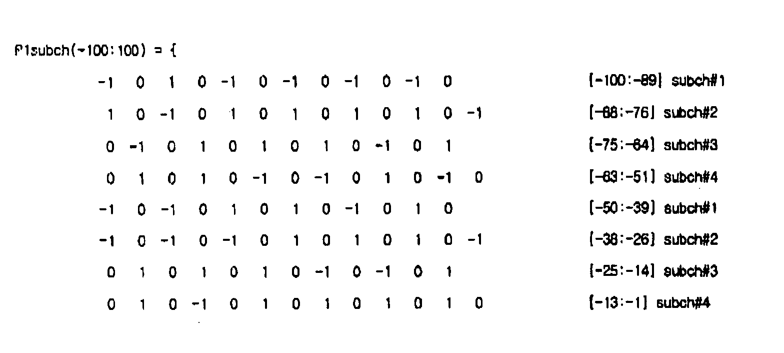

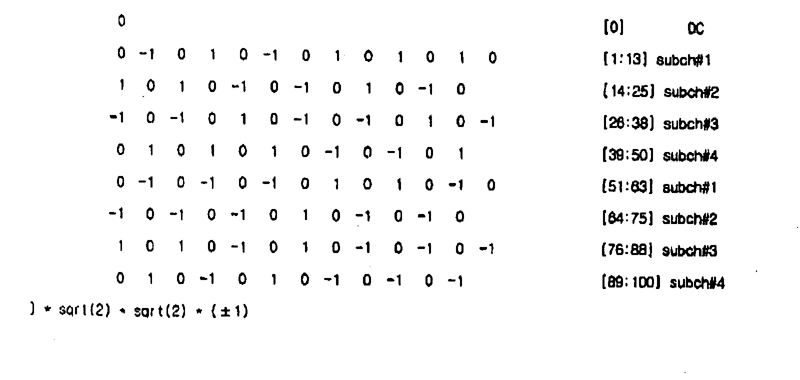

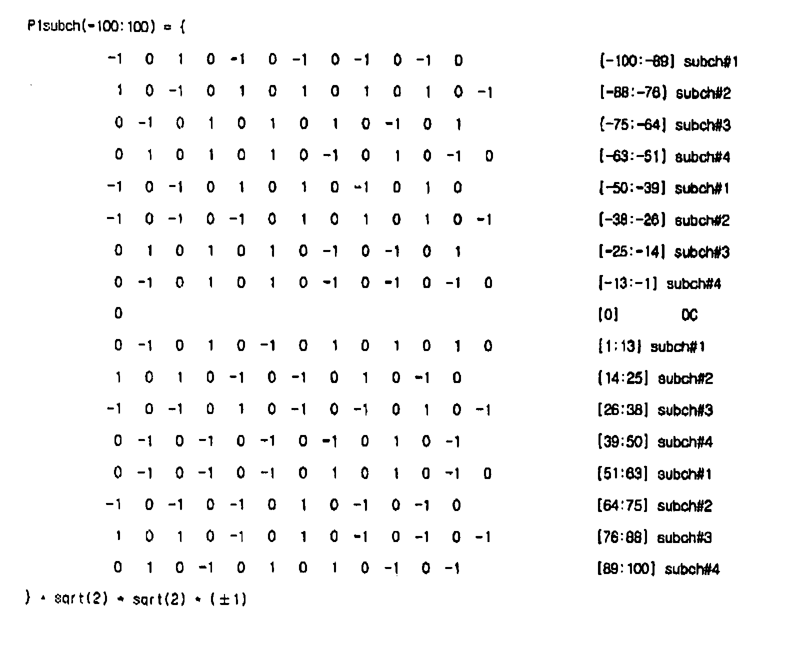

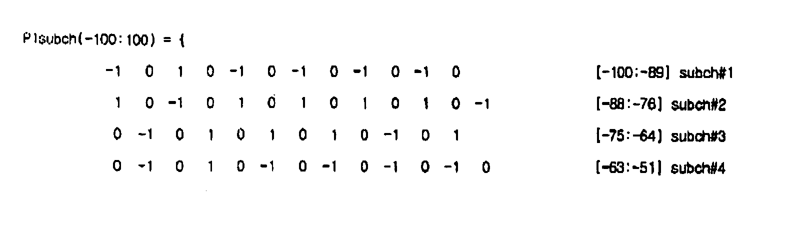

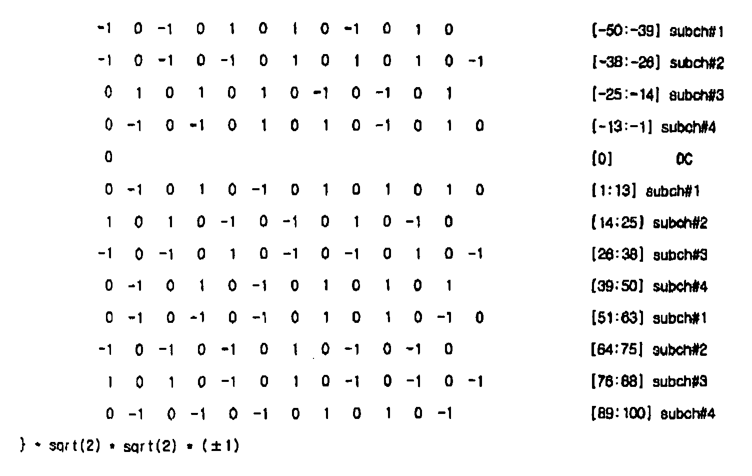

In addition, when 2 subchannels are used in the subchannelization process, a preamble sequence for the case where the corresponding subchannels are used is mapped to each of the subcarriers actually in use, i.e., -100^{th},..., -1^{st},1^{st},...,100^{th} subcarriers, and as a result, the short preamble sequence P2subch(-100:100) is mapped to all of the subcarriers. Here, the short preamble sequence P2subch(-100:100) represent short preamble sequences for the case where the respective subchannels are used, i.e., sequences for the case where P2(1+3)subch(-100:100) and P2(2+4)subch(-100:100) are all applied. The short preamble sequences P2subch(-100:100) are 8 in total, as follows.

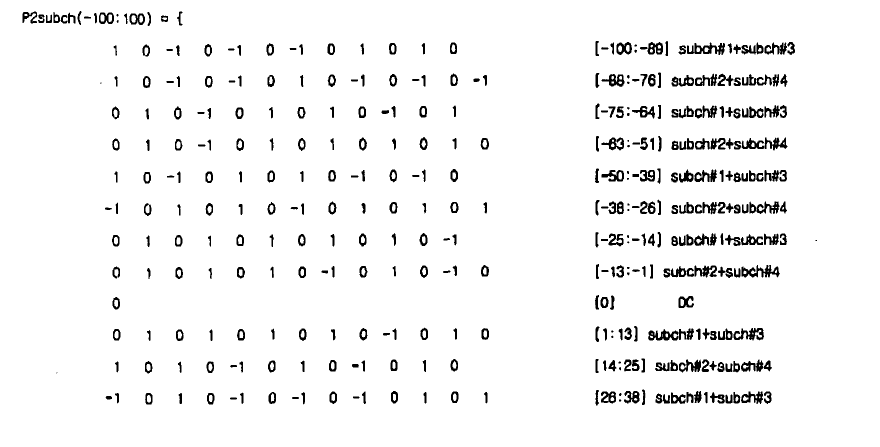

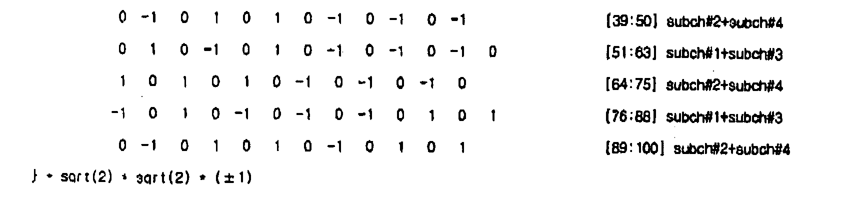

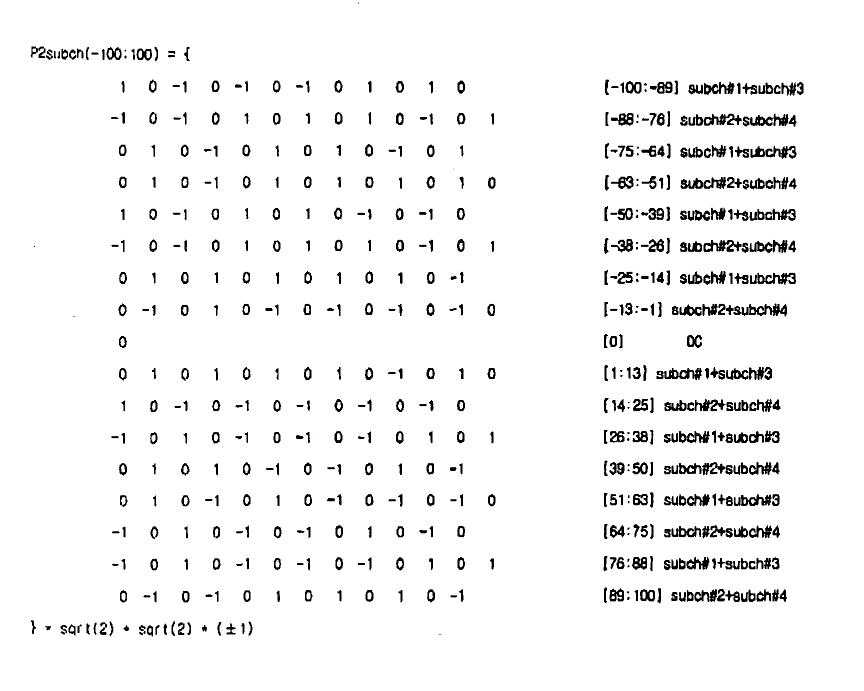

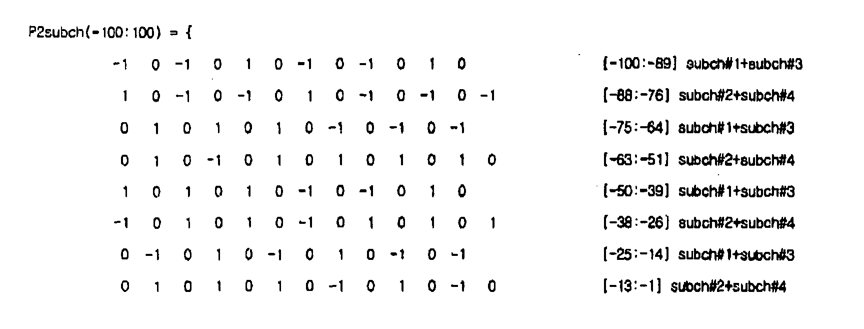

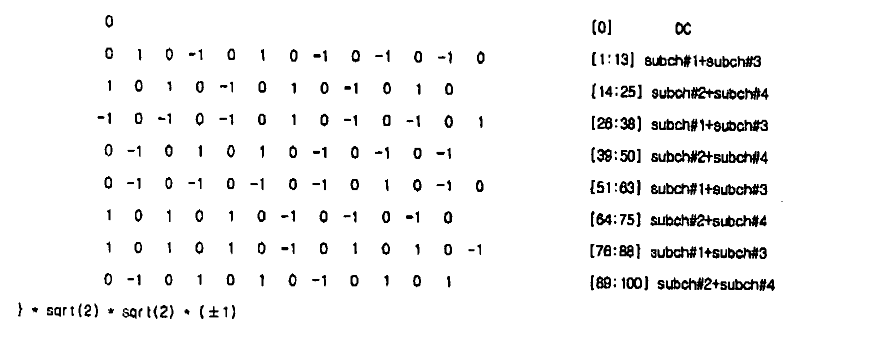

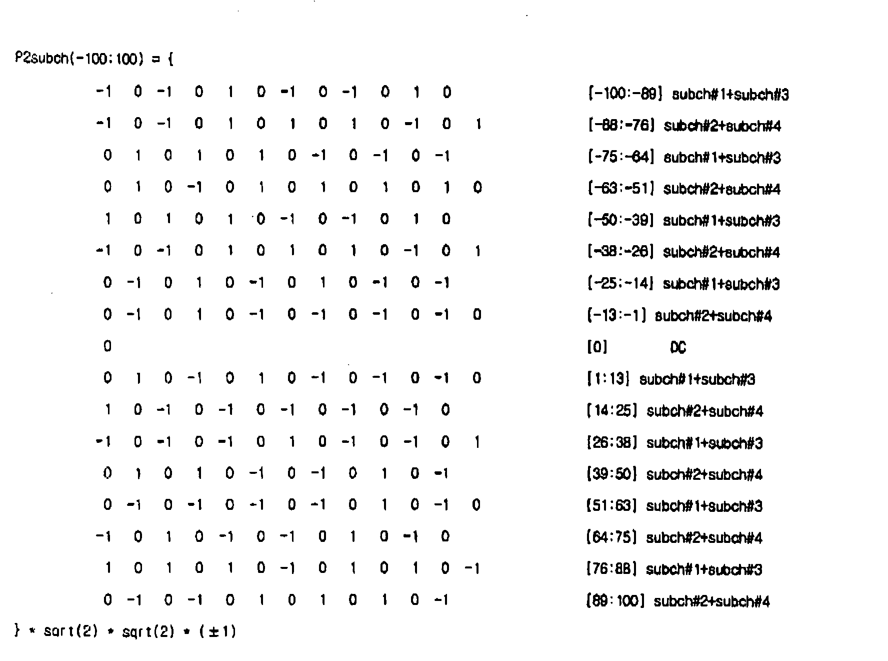

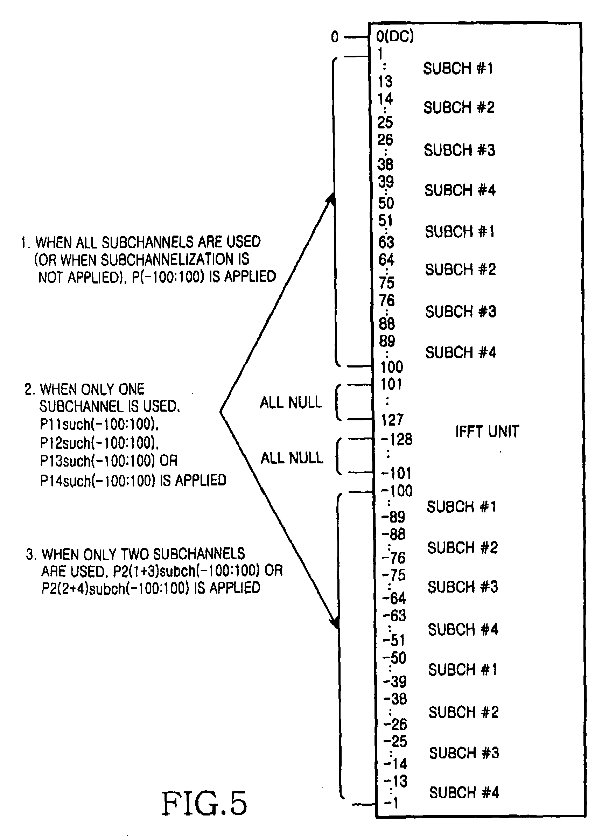

FIG 5 is a diagram illustrating a mapping relation between subcarriers and a preamble sequence when IFFT is performed in an OFDM communication system according to an embodiment of the present invention. It is assumed in FIG. 5 that if the number of all of the subcarriers for an OFDM communication system is 256, the 256 subcarriers include -128^{th} to 127^{th} subcarriers, and if the number of subcarriers actually in use is 200, the 200 subcarriers include -100^{th},..., -1^{st},1^{st},...,100^{th} subcarriers. In FIG. 5, input numerals at an IFFT's front end represent frequency components, i.e., unique numbers of subcarriers. Here, the reason for inserting null data, or 0-data, into a 0^{th} subcarrier is because the 0^{th} subcarrier, after performing IFFT, represents a reference point of a preamble sequence in a time domain, i.e., represents a DC component in a time domain. Also, null data is inserted into 28 subcarriers of -128^{th} to -101^{st} subcarriers and 27 subearriers of 101^{st} to 127^{th} subcarriers excluding the 0^{th} subcarrier from 200 subcarriers actually in use. The reason for inserting null data into 28 subcarriers of -128^{th} to -101^{st} subcarriers and 27 subcarriers of 101^{st} to 127^{th} subcarriers is to provide a guard interval in a frequency domain because the 28 subcarriers of the -128^{th} to -101^{st} subcarriers and the 27 subcarriers of 101^{st} to 127^{th} subcarriers correspond to a high frequency band in a frequency domain. As a result, if a frequency-domain preamble sequence of P11subch(-100:100), P12subch(-100:100), P13subch(-100:100), P2(1+3)subch(-100:100), or P2(2+4)subch(-100:100) is applied to a IFFT unit, the IFFT unit IFFT-transforms an input frequency-domain preamble sequence of P11subch(-100:100), P12subch(-100:100), P13subch(-100:100), P2(1+3)subch(-100:100), or P2(2+4)subch(-100:100) after mapping the input frequency-domain preamble sequence to its corresponding subcarriers, thereby outputting a time-domain preamble sequence.

A description will now be made of a mapping relation between a preamble sequence and subcarriers according to an embodiment of the present invention.

### (1) All of the 4 subchannels used, (i.e., subchannelization not applied)

When all of the 4 subchannels are used, a preamble sequence P(-100:100) is mapped to corresponding subcarriers. In the process of mapping the preamble sequence P(-100:100) to corresponding subcarriers, null data is inserted into 28 subcarriers of -128^{th} to -101^{st} subcarriers and 27 subcarriers of 101^{st} to 127^{th} subcarriers, which are guard interval components, in the same manner as done in the common OFDM communication system. However, unlike in the conventional OFDM communication system, when all of the 4 subchannels are used, the preamble sequence P(-100:100) is mapped to the remaining 200 subcarriers except the guard interval components in accordance with the first preamble sequence mapping rule. However, null data (or 0-data) is inserted into a 0^{th} subcarrier of the P(-100:100) so that a time-domain DC component should be considered.

### (2) One subchannel used

When one subchannel is used, a preamble sequence of P11subch(-100:100), P12subch(-100:100), P13subch(-100:100), or P14subch(-100:100) is mapped to corresponding subcarriers. In the process of mapping the preamble sequence of P11subch(-100:100), P12subch(-100:100), P13subch(-100:100), or P14subch(-100:100) to corresponding subcarriers, null data is inserted into 28 subcarriers of -128^{th} to -101^{st} subcarriers and 27 subcarriers of 101^{st} to 127^{th} subcarriers, which are guard interval components, in the same manner as done in the common OFDM communication system. However, one of the second to fifth preamble sequence mapping rules is correspondingly applied to subchannels used when mapping the preamble sequence of P11subch(-100:100), P12subch(-100:100), P13subch(-100:100), or P14subch(-100:100) to the remaining 200 subcarriers. However, null data is inserted into a 0^{th} subcarrier of the P11subch(-100:100), P12subch(-100:100), P13subch(-100:100), or P14subch(-100;100) so that a time-domain DC component should be considered.

For example, when a subchannel #1 among the 4 subchannels was assigned, the P11subch(-100:100) is mapped to corresponding subchannels as described with reference to the second preamble sequence rule. That is, 1, 0, 1, 0, - 1, 0, -1, 0, 1, 0, -1, 0 are mapped to -100^{th} to -89^{th} subcarriers, respectively; 1, 0, -1, 0, 1, 0, 1, 0, 1, 0, 1, 0 are mapped to -50^{th} to -39^{th} subcarriers, respectively; 0, 1, 0, 1, 0, 1, 0, -1, 0, -1, 0, 1, 0 are mapped to 1^{st} to 13^{th} subcarriers, respectively; and 0, 1, 0, -1, 0, 1, 0, -1, 0, -1, 0, -1, 0 are mapped to 51^{st} to 63^{rd} subcarriers, respectively. In addition, null data is inserted into the remaining subcarriers excluding the -100^{th} to -89^{th} subcarriers, -50^{th} to -39^{th} subcarriers, 1^{st} to 13^{th} subcarriers and 51^{st} to 63^{rd} subcarriers.

### (3) Two subchannels used

When two subchannels are used, a preamble sequence of P2(1+3)subch(-100:100) or P2(2+4)subch(-100:100) is mapped to corresponding subcarriers. In the process of mapping the preamble sequence of P2(1+3)subch(-100:100) or P2(2+4)subch(-100:100) to corresponding subcarriers, null data is inserted into 28 subcarriers of -128^{th} to -101^{st} subcarriers and 27 subcarriers of 101^{st} to 127^{th} subcarriers, which are guard interval components, in the same manner as done in the common OFDM communication system. However, null data is inserted into a 0^{th} subcarrier of the P2(1+3)subch(-100:100) or P2(2+4)subch(-100:100) so that a time-domain DC component should be considered. However, the sixth preamble sequence mapping rule or the seventh preamble sequence mapping rule is correspondingly applied to subchannels used when mapping the preamble sequence of P2(1+3)subch(-100:100) or P2(2+4)subch(-100:100) to the remaining 200 subcarriers.

For example, when a subchannel #1 and a subchannel #3 among the 4 subchannels were assigned, only a corresponding preamble sequence of the P2(1+3)subch(-100:100) is mapped to corresponding subchannels as described with reference to the sixth preamble sequence rule. That is, 1, 0, -1, 0, -1, 0, -1, 0, 1, 0, 1, 0 are mapped to -100^{th} to -89^{th} subcarriers, respectively; 0, 1, 0, -1, 0, 1, 0, 1, 0, -1, 0, 1 are mapped to -75^{th} to -64^{th} subcarriers, respectively; 1, 0, -1, 0, 1, 0, 1, 0, -1, 0, -1, 0 are mapped to -50^{th} to -39^{th} subcarriers, respectively; 0, 1, 0, 1, 0, 1, 0, 1, 0, 1, 0, -1 are mapped to -25^{th} to -14^{th} subcarriers, respectively; 0, 1, 0, 1, 0, 1, 0, 1, 0, -1, 0, 1, 0 are mapped to 1^{st} to 13^{th} subcarriers, respectively; -1, 0, 1, 0, -1, 0, -1, 0, -1, 0, 1, 0, 1 are mapped to 26^{th} to 38^{th} subcarriers, respectively, 0, 1, 0, -1, 0, 1, 0, -1, 0, -1, 0, -1, 0 are mapped to 51^{st} to 63^{rd} subcarriers, respectively; and -1, 0, 1, 0, -1, 0, -1, 0, -1, 0, 1, 0, 1 are mapped to 76^{th} to 88^{th} subcarriers, respectively. In addition, null data is inserted into the remaining subcarriers excluding the -100^{th} to -89^{th} subcarriers, -75^{th} to -64^{th} subcarriers, -50^{th} to -39^{th} subcarriers, -25^{th} to -14^{th} subcarriers, 1^{st} to 13^{th} subcarriers, 26^{th} to 38^{th} subcarriers, 51^{st} to 63^{rd} subcarriers, and 76^{th} to 88^{th} subcarriers.

Consequently, unlike the conventional technology, the invention maps a preamble sequence to subcarriers in the subchannel assignment method to decrease a PAPR of the preamble sequence, thereby improving performance of the OFDM communication system.

In the case of the new short preamble sequence used in the subchannelization process, PAPRs of respective subchannels are shown in Table 2. In a process of calculating PAPRs of the subchannels, a cyclic prefix is not considered.

**Table 2**

| Subchannel | PAPR [dB] |
|---|---|
| 1 | 2.388903 |
| 2 | 2.322998 |
| 3 | 2.322998 |
| 4 | 2.388903 |
| 1+3 | 2.992562 |
| 2+4 | 2.992562 |
| 1+2+3+4 | 2.671489 |

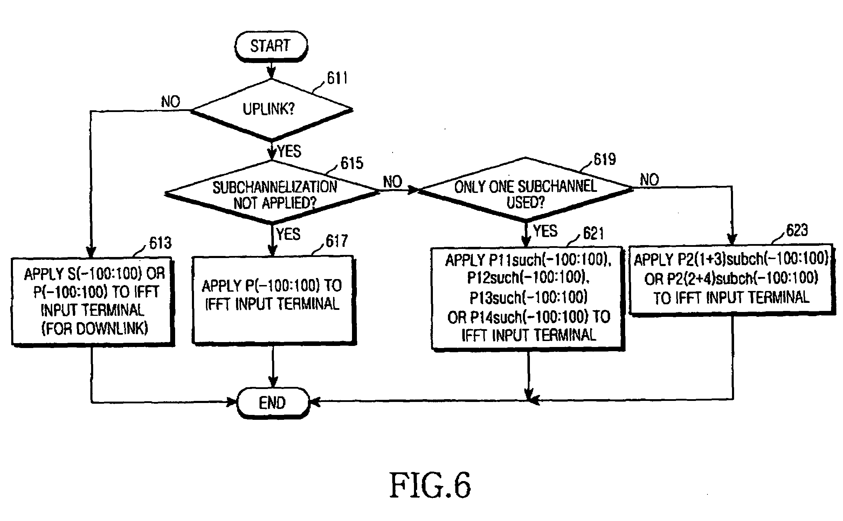

A process of generating a preamble sequence according to the present invention will now be described with reference to FIG. 6.

FIG 6 is a flowchart illustrating a procedure for mapping a preamble sequence according to an embodiment of the present invention. Referring to FIG 6, in step 611, a transmitter determines whether a transmission signal is an uplink signal. If it is determined that the transmission signal is not an uplink signal but a downlink signal, the transmitter proceeds to step 613. In step 613, the transmitter applies a corresponding preamble sequence S(-100:100) or P(-100:100) for the downlink signal to an IFFT unit, maps the corresponding preamble sequence to corresponding subcarriers while IFFT is performed, and then ends the procedure. Here, the S(-100:100) is the same preamble sequence as S(-100:100) described in the prior art section, while the P(-100:100) is a new preamble sequence proposed in the present invention. If it is determined in step 611 that the transmission signal is an uplink signal, the transmitter proceeds to step 615. In step 615, the transmitter determines whether the subchannelization method is not applied during transmission of the uplink signal, i.e., whether all of the subchannels are assigned. As a result of the determination, if all of the subchannels are assigned during uplink signal transmission, the transmitter proceeds to step 617. In step 617, the transmitter maps a preamble sequence P(-100:100) to corresponding subcarriers as described in conjunction with FIG. 5, and then ends the procedure. That is, the transmitter inserts null data into a 0^{th} subcarrier which is a time-domain DC component, inserts null data into 28 subcarriers of -128^{th} to -101^{st} subcarriers and 27 subcarriers of 101^{st} to 127^{th} subcarriers, which are guard interval components, and maps the preamble sequence P(-100:100) to the remaining 200 subcarriers.

However, if it is determined in step 615 that not all of the subchannels are assigned during uplink signal transmission, the transmitter proceeds to step 619. In step 619, the transmitter determines whether one subchannel is assigned during the uplink signal transmission. As a result of the determination, if one subchannel is assigned during the uplink signal transmission, the transmitter proceeds to step 621. In step 621, the transmitter inserts null data into a 0^{th} subcarrier which is the time-domain DC component, inserts null data into 28 subcarriers of -128^{th} to -101^{st} subcarriers and 27 subcarriers of 101^{st} to 127^{th} subcarriers, which are guard interval components, and maps the preamble sequence of P11subch(-100:100), P12subch(-100:100), P13subch(-100:100) or P14subch(-100:100) to the remaining 200 subcarriers according to one of the second to fifth preamble sequence mapping rules. Because the process of mapping the preamble sequence of P11subch(-100:100), P12subch(-100:100), P13subch(-100:100) or P14subch(-100:100) according to the second to fifth preamble sequence mapping rules has been described in conjunction with FIG. 5, a detailed description thereof will be omitted herein for simplicity.

However, if it is determined in step 619 that not one, but two subchannels are assigned during the uplink signal transmission, the transmitter proceeds to step 623. In step 623, the transmitter inserts null data into a 0^{th} subcarrier which is the time-domain DC component, inserts null data into 28 subcarriers of -128^{th} to -101^{st} subcarriers and 27 subcarriers of 101^{st} to 127^{th} subcarriers, which are guard interval components, maps the preamble sequence of P2(1+3)subch(-100:100) or P2(2+4)subch(-100:100) to the remaining 200 subcarriers according to the sixth preamble sequence mapping rule or the seventh preamble sequence mapping rule. Because the process of mapping the preamble sequence of P2(1+3)subch(-100:100) or P2(2+4)subch(-100:100) according to the sixth preamble sequence mapping rule or the seventh preamble sequence mapping rule has been described in conjunction with FIG. 5, a detailed description thereof will be omitted herein for simplicity.

As can be appreciated from the foregoing description, the present invention proposes a preamble sequence having a minimum PAPR for each of all possible cases where subchannels are assigned in a subchannelization process in an OFDM communication system, thereby improving performance of the OFDM communication system. In addition, the invention proposes a preamble sequence having a minimum PAPR when a subchannelization method is not used in an OFDM communication system, thereby improving performance of the OFDM communication system. Furthermore, the present invention proposes a different preamble sequence for each of all possible cases where subchannels are assigned in an uplink subchannelization process, to minimize a preamble sequence generation condition, thus making it possible to generate a preamble sequence in a simple method.

While the present invention has been shown and described with reference to a certain preferred embodiment thereof, it will be understood by those skilled in the art that various changes in form and details may be made therein without departing from the spirit and scope of the invention as defined by the appended claims.

## Claims

1. A method for generating a preamble sequence in an orthogonal frequency division multiplexing (OFDM) communication system having m subcarriers in a frequency domain, the method comprising the steps of:
generating a preamble sequence of length n that is mapped to n subcarriers on a one-to-one basis, where n is less than m; and
assigning components constituting the preamble sequence to the n subcarriers among the m subcarriers on a one-to-one mapping basis, assigning null data to remaining subcarriers excluding the n subcarriers from the m subcarriers, and then IFFT (Inverse Fast Fourier Transform)-transforming the assigned result into time-domain data.

2. The method of claim 1, wherein the preamble sequence generating step comprises the step of generating the preamble sequence so that the null data is inserted in a particular subcarrier corresponding to a direct current (DC) component in the frequency domain among the n subcarriers.

3. The method of claim 1, wherein if m=256 and n=200, then the preamble sequence is generatedas follows: 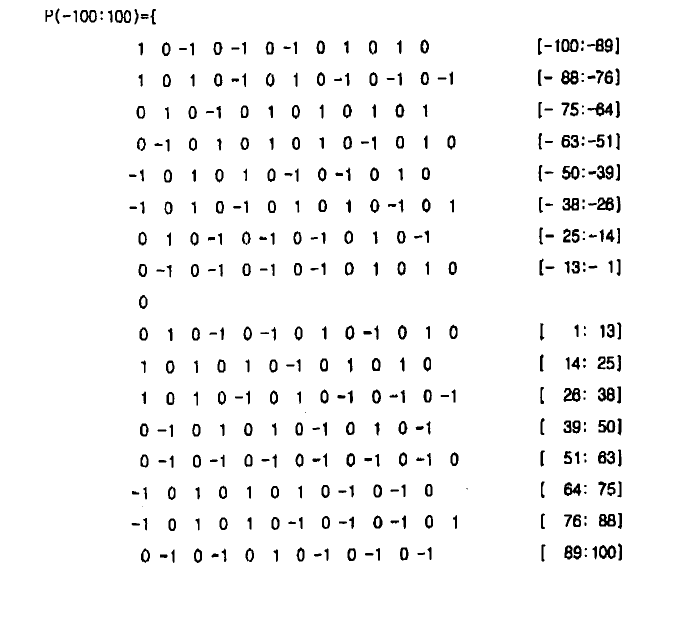 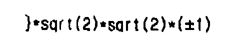 where '-n:n' represents subcarriers of -n^{th} to n^{th} subcarriers.

4. An apparatus for generating a preamble sequence in an orthogonal frequency division multiplexing (OFDM) communication system having m subcarriers in a frequency domain, the apparatus comprising:
a preamble sequence generator for generating a preamble sequence of length n that is mapped to n subcarriers on a one-to-one basis, where n is less than m; and
an inverse fast Fourier transformer (IFFT) for assigning components constituting the preamble sequence to the n subcarriers among the m subcarriers on a one-to-one mapping basis, assigning null data to remaining subcarriers excluding the n subcarriers from the m subcarriers, and then IFFT-transforming the assigned result into time-domain data.

5. The apparatus of claim 4, wherein the preamble sequence generator generates the preamble sequence so that the null data is inserted in a particular subcarrier corresponding to a direct current (DC) component in the frequency domain among the n subcarriers.

6. The apparatus of claim 4, wherein if m=256 and n=200, then the preamble sequence is generatedas follows: 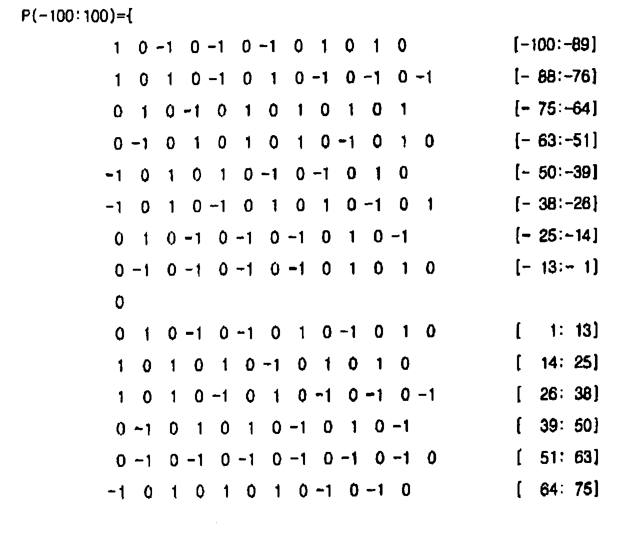 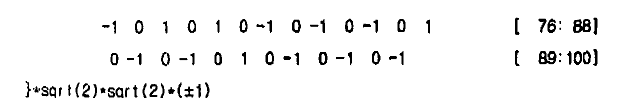 where '-n:n' represents subcarriers of -n^{th} to n^{th} subcarriers.
